(19) Europäisches Patentamt / European Patent Office / Office européen des brevets

(11) **EP 4 384 560 B1**

(12) **EUROPEAN PATENT SPECIFICATION**

(45) Date of publication and mention of the grant of the patent:
**05.11.2025 Bulletin 2025/45**

(21) Application number: **22760846.0**

(22) Date of filing: **17.06.2022**

(51) International Patent Classification (IPC):
***C08F 220/18*** $^{(2006.01)}$ ***D06M 15/643*** $^{(2006.01)}$

(52) Cooperative Patent Classification (CPC):
(C-Sets available)
**C08F 220/1818; D06M 15/3568; D06M 15/643;**
D06M 2200/12 (Cont.)

(86) International application number:
**PCT/US2022/073008**

(87) International publication number:
**WO 2023/019044 (16.02.2023 Gazette 2023/07)**

(54) **SILICONE-(METH)ACRYLATE COPOLYMER EMULSION FORMULATION FOR TEXTILE TREATMENT**

SILIKON-(METH)ACRYLAT-COPOLYMER-EMULSIONSFORMULIERUNG ZUR TEXTILBEHANDLUNG

FORMULATION D'ÉMULSION DE COPOLYMÈRE DE SILICONE-(MÉTH)ACRYLATE DESTINÉE AU TRAITEMENT TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2021 US 202163231280 P**

(43) Date of publication of application:
**19.06.2024 Bulletin 2024/25**

(73) Proprietors:
- **Dow Silicones Corporation**
  **Midland, Michigan 48686 (US)**
- **Rohm and Haas Company**
  **Collegeville, PA 19426 (US)**

(72) Inventors:
- **JELETIC, Matthew**
  **Midland, Michigan 48686-0994 (US)**
- **HASSO, Douglas**
  **Midland, Michigan 48686-0994 (US)**
- **MECCA, Jodi**
  **Midland, Michigan 48686-0994 (US)**
- **DOMBROWSKI, Gary**
  **Collegeville, Pennsylvania 19426 (US)**

(74) Representative: **Murgitroyd & Company**
**165-169 Scotland Street**
**Glasgow G5 8PL (GB)**

(56) References cited:
**JP-A- 2017 218 713**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 384 560 B1

Processed by Luminess, 75001 PARIS (FR)

**(Cont. next page)**

(52) Cooperative Patent Classification (CPC): (Cont.)

C-Sets
**C08F 220/1818, C08F 230/08, C08F 220/20;**
**C08F 220/1818, C08F 230/085, C08F 220/20**

## Description

TECHNICAL FIELD

An emulsion formulation containing a silicone - (meth)acrylate copolymer and a method for preparing the emulsion formulation are provided. The emulsion formulation is useful for treating textiles to provide the textiles with durable water repellency.

BACKGROUND

In water repellent textile treatment applications, fluorocarbon materials have dominated the market due to their ability to provide excellent durable water repellency. However, regulatory and customer pressures are contributing to an industry need for non-fluorocarbon based textile treatments. Previously disclosed fluorocarbon-free textile treatments suffer the drawback of providing poor durability, where water repellency of textiles treated therewith decreases significantly after multiple washings. JP2017218713A discloses a water repellent agent which is an aqueous dispersant containing no fluorine, containing an acryl-silicone-based copolymer having a repeating unit derived from a long chain (meth)acrylic acid ester monomer (A) containing no fluorine having 16 to 30 carbon atoms of an ester part, and a repeating unit containing an organopolysiloxane residue derived from a radical reactive organopolysiloxane macromonomer (B) containing no fluorine, total constitution ratio of the monomer (A) and the macromonomer (B) of 51 to 100 wt.% based on total amount of monomer constituting the copolymer, and constitution ratio of the macromonomer (B) of 0.01 to 50 wt.% based on total amount of the monomer unit constituting the copolymer, a nonionic surfactant and a cationic surfactant.

SUMMARY

An emulsion formulation and process for its preparation are disclosed. The emulsion formulation comprises (I) a silicone - (meth)acrylate copolymer; (II) a nonionic surfactant, (III) water, and (IV) a water dispersible crosslinker. The emulsion formulation is suitable for treating a textile.

DETAILED DESCRIPTION

As introduced above, starting material (I) in the emulsion formulation is the silicone - (meth)acrylate copolymer (copolymer). The copolymer comprises unit formula:

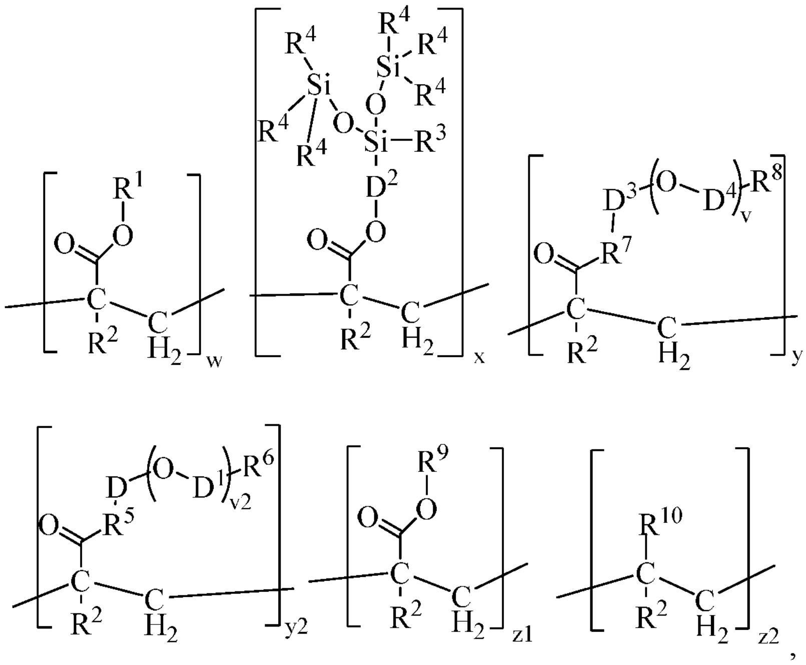

where each $R^1$ is an independently selected alkyl group of 16 to 24 carbon atoms; each $R^2$ is independently selected from the group consisting of H and methyl; each $D^2$ is a divalent hydrocarbon group of 2 to 12 carbon atoms; each $R^3$ is independently selected from the group consisting of $R^4$ and a group of formula $-OSi(R^4)_3$; each $R^4$ is an independently

selected monovalent hydrocarbon group of 1 to 12 carbon atoms; each $R^7$ is independently selected from the group consisting of an oxygen atom and NH; $D^3$ is a divalent hydrocarbon group of 1 to 12 carbon atoms; $D^4$ is an alkylene group of 2 to 4 carbon atoms or a divalent alkylarylene group; subscript v represents the number of units of formula ($OD^4$) in the unit with subscript y, and subscript v has a value of 0 to 12; each $R^8$ is a crosslinkable group; each $R^5$ is independently selected from the group consisting of an oxygen atom and NH; D is a divalent hydrocarbon group of 1 to 12 carbon atoms; each $D^1$ is an alkylene group of 2 to 4 carbon atoms or a divalent alkylarylene group; subscript v2 represents the number of units of formula ($OD^1$) in the unit with subscript y2, and subscript v2 has a value of 0 to 20; each $R^6$ is independently selected from the group consisting of a hydroxyl group and an alkoxy group (e.g., methoxy); each $R^9$ is a monovalent hydrocarbon group of 1 to 14 carbon atoms; each $R^{10}$ is independently selected from the group consisting of a halogen (e.g., chloride), an acetate group, or a monovalent hydrocarbon group of 1 to 14 carbon atoms; subscripts w, x, y, y2, z1, and z2 represent relative weights of each unit in the copolymer, subscript w has a value of 80 to 98; subscript x has a value of 1 to 15; subscript y has a value of 1 to 5; subscript y2 has a value of 0 to 5; subscript z1 has a value of 0 to 18; and subscript z2 has a value of 0 to 18, and a quantity (w + x + y + y2 + z1 + z2) = 100. The copolymer further comprises a terminal moiety.

In the unit formula above, $R^1$ has 16 to 24 carbon atoms. Alternatively, $R^1$ may have at least 16, alternatively at least 17, alternatively at least 18 carbon atoms, while at the same time $R^1$ may have up to 24, alternatively up to 23, and alternatively up to 22 carbon atoms. Alternatively, $R^1$ may have 17 to 23, carbon atoms, alternatively 16 to 22 carbon atoms, alternatively 17 to 24 carbon atoms, and alternatively 18 to 22 carbon atoms. $R^1$ may be selected from the group consisting of stearyl, eicosyl, and behenyl. Alternatively, $R^1$ may be stearyl.

In the unit formula above, the unit with subscript x is a silicone - (meth)acrylate macromonomer unit. In the silicone - methacrylate macromonomer unit, each $R^3$ is independently selected from the group consisting of $R^4$ and a group of formula $-OSi(R^4)_3$; where each $R^4$ is an independently selected monovalent hydrocarbon group of 1 to 12 carbon atoms. In the silicone - (meth)acrylate macromonomer unit, the monovalent hydrocarbon group for $R^4$ may be an alkyl group, such as an alkyl group of 1 to 6 carbon atoms. Alternatively, the alkyl groups may have 1 to 3 carbon atoms, alternatively 1 to 2 carbon atoms. Alternatively, each $R^4$ may be methyl.

In the unit formula above, each $D^2$ is a divalent hydrocarbon group of 2 to 12 carbon atoms. Alternatively, $D^2$ may have 2 to 10, alternatively 3 to 5, and alternatively 3 carbon atoms. Each $D^3$ and each D is independently a divalent hydrocarbon group of 1 to 12 carbon atoms. Alternatively, each $D^3$ and each D may be an alkylene group; alternatively ethylene. $D^4$ and $D^1$ are each independently an alkylene group of 2 to 4 carbon atoms or a divalent alkylarylene group.

The divalent hydrocarbon group for $D^4$ and $D^1$ may be exemplified by an alkylene group such as ethylene, propylene, or butylene; an arylene group such as phenylene, or an alkylarylene group such as:

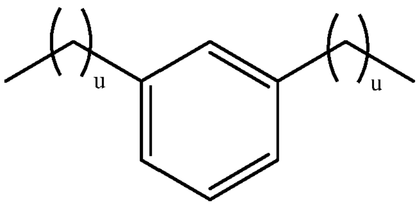

or

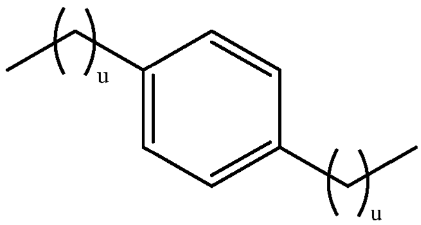

,

where each subscript u is independently 1 to 6, alternatively 1 to 2. Alternatively, the divalent hydrocarbon group may be alkylene, and alternatively the divalent hydrocarbon group may be ethylene. The divalent hydrocarbon group for D, $D^2$ and $D^3$ may be as described above, and alternatively may be methylene. Alternatively, $D^2$ may be methylene, ethylene or propylene; alternatively propylene. Alternatively, $D^2$ may be linear, e.g., $-(CH_2)_2-$ or $-(CH_2)_3-$.

In the unit formula above, each $R^7$ is independently selected from the group consisting of an oxygen atom and NH. Alternatively, each $R^7$ may be oxygen.

In the unit formula above, each $R^8$ is a crosslinkable group. Each $R^8$ may be independently selected from the group consisting of hydroxy, amino, epoxy, ureido, and acetoxy. Alternatively, each $R^8$ may be independently selected from the group consisting of hydroxy and ureido, and alternatively each $R^8$ may be hydroxy.

In the unit formula above each $R^5$ is an oxygen atom. Each $R^6$ is selected from the group consisting of -OH and alkoxy. Alternatively, the alkoxy group for $R^6$ may be $-OCH_3$.

In the unit formula above, each $R^9$ is a monovalent hydrocarbon group, which is free of aliphatic unsaturation and which may be linear, branched, or cyclic (i.e., monocyclic or polycyclic), or combinations thereof. $R^9$ may be an alkyl group or an aryl group, which may be monocyclic or polycyclic, and which may optionally have linear or branched groups. Examples of suitable alkyl groups for $R^9$ may include methyl, t-amyl, butyl (including t-butyl), cyclohexyl, iso-decyl, isobornyl, and 2-ethylhexyl. Examples of suitable aryl groups include phenyl, naphthyl, anthracyl, and benzyl.

In the unit formula above, $R^{10}$ may be a halide, an acetate, or a monovalent hydrocarbon group, as described above for $R^9$. The halide may be bromide (Br), chloride (Cl), fluoride (F) or iodide (I); alternatively Br, Cl or F; alternatively Br

or Cl; and alternatively Cl.

In the unit formula above, subscripts w, x, y, y2, z1, and z2 are relative weights of each unit, and a quantity (w + x + y + y2 + z1 + z2) may total 100. Subscript w has a value of 80 to 98. Alternatively, subscript w may be at least 80, alternatively at least 81, alternatively at least 82, alternatively at least 83, alternatively at least 84, alternatively at least 85, alternatively at least 86, alternatively at least 87, and alternatively at least 88; while at the same time, subscript w is up to 98, alternatively up to 97, alternatively up to 96, alternatively up to 95, alternatively up to 94, alternatively up to 93, alternatively up to 92, alternatively up to 91, alternatively up to 90, alternatively up to 89, and alternatively up to 88. Alternatively, subscript w may be 84 to 92, alternatively 85 to 91, alternatively 86 to 90, alternatively 87 to 89, and alternatively 88.

Subscript x has a value of 1 to 15, alternatively 5 to 15. Alternatively, subscript x may be at least 1, alternatively at least 5, alternatively at least 6, alternatively at least 7, alternatively at least 8, alternatively at least 9, alternatively at least 10; while at the same time, subscript x may be up to 15, alternatively up to 14, alternatively up to 13, alternatively up to 12, alternatively up to 11, and alternatively up to 10. Alternatively, subscript x may be 1 to 14, alternatively 2 to 13, alternatively 3 to 12, alternatively 4 to 11, alternatively 5 to 10, alternatively 7 to 13; and alternatively 10.

Subscript y has a value of 1 to 5. Alternatively, subscript y may be at least 1, alternatively at least 1.25, alternatively at least 1.5, alternatively at least 1.75, and alternatively at least 2; while at the same time, subscript y may be up to 5, alternatively up to 4, alternatively up to 3, alternatively up to 2.75, alternatively up to 2.5, and alternatively up to 2.25. Alternatively, subscript y may be 1 to 3, alternatively 1 to 2, alternatively 1.5 to 2.5, alternatively 1.75 to 2.25, and alternatively 2.

Subscript y2 has a value of 0 to 5. Alternatively, subscript y2 may be at least 1, alternatively at least 1.25, alternatively at least 1.5, alternatively at least 1.75, and alternatively at least 2; while at the same time, subscript y2 may be up to 5, alternatively up to 4, alternatively up to 3, alternatively up to 2.75, alternatively up to 2.5, and alternatively up to 2.25. Alternatively, subscript y2 may be 0 to 3, alternatively 1 to 2, alternatively 1.5 to 2.5, alternatively 1.75 to 2.25, and alternatively 2.

Subscript z1 may be 0. Alternatively, subscript z1 may be at least 0.5, alternatively at least 1, and alternatively at least 2; while at the same time, subscript z1 may be up to 18, alternatively up to 15, alternatively up to 10, alternatively up to 8, and alternatively up to 5. Alternatively, subscript z1 may be 0 to 18, alternatively > 0 to 18, alternatively 0.5 to 7, alternatively 1 to 6, and alternatively 2 to 5.

Subscript z2 may be 0. Alternatively, subscript z2 may be at least 0.5, alternatively at least 1, and alternatively at least 2; while at the same time, subscript z2 may be up to 8, alternatively up to 7, alternatively up to 6, alternatively up to 5, and alternatively up to 4. Alternatively, subscript z2 may be 0 to 8, alternatively > 0 to 8, alternatively 0.5 to 7, alternatively 1 to 6, and alternatively 2 to 5.

The total number of units per molecule of copolymer is not specifically restricted. However, the copolymer may have a number average molecular weight of 100,000 g/mol to 4,000,000 g/mol; alternatively 200,000 g/mol to 3,000,000 g/mol; and alternatively 100,000 g/mol to 1,000,000 g/mol; by conventional methods based on the selection of each monomer and the chain transfer agent. The units shown above may be in any order, e.g., the copolymer may be a random copolymer or a block copolymer.

One skilled in the art would recognize that the copolymer may be prepared by radical polymerization, via a process as described below, and that this process would form the terminal moiety for the copolymer. The copolymer further comprises a terminal moiety which may be derived from an initiator, a chain transfer agent, or both, as described, for example in Odian, George (2004). Principles of Polymerization (4th ed.). New York: Wiley-Interscience. ISBN 978-0-471-27400-1.

The copolymer may be prepared via a process comprising:

(1) copolymerizing starting materials comprising

80 weight % to 98 weight % of (A) a crystallizable monomer of formula

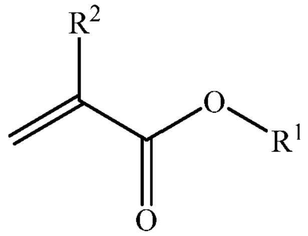

,

where $R^1$ and $R^2$ are as described above;

1 weight % to 15 weight % of (B) a silicone - (meth)acrylate macromonomer of formula

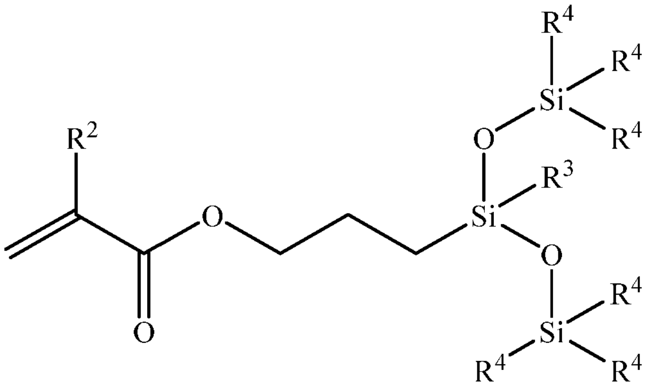,

where $R^2$, $R^3$ and $R^4$ are as described above;
1 weight % to 5 weight % of (C) a crosslinkable (meth)acrylate monomer of formula

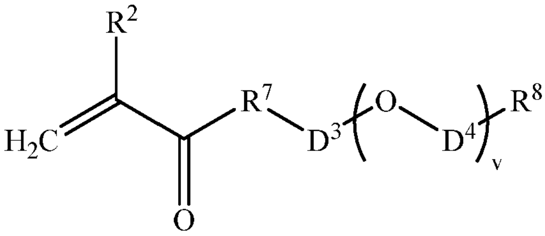,

where $R^2$, $R^7$, $D^3$, $D^4$, $R^8$, and subscript v are as described above;
where amounts of starting materials (A), (B), and (C) total 100 weight% based on combined amounts of starting materials (A), (B), and (C); and starting materials (A), (B), and (C) are copolymerized in an emulsion further comprising
(D) a surfactant;
(E) water;
(F) an initiator; and

thereby forming an aqueous emulsion comprising (I) the silicone - (meth)acrylate copolymer, (D) the surfactant and (E) the water. The process may optionally further comprise adding an additional starting material in step (1), where the additional starting material is selected from the group consisting of (G) a chain transfer agent; (H) an additional monomer that is distinct from starting materials (A), (B), and (C); (J) an inhibitor; (K) a reactive surfactant, and a combination of two or more of (G), (H), (J), and (K).

Step (1) of the process described above may comprise forming an emulsion comprising starting materials (A), (B), (C), (D), (E), and (F) (and optionally (G), (H), (J), and/or (K)). If starting material (A) is a solid at RT, the starting materials may be heated to a temperature and for a time sufficient to melt starting material (A), *e.g.,* 30 °C to 50 °C for 5 minutes to 15 minutes. The resulting starting materials may be mixed under shear to form the aqueous emulsion. Mixing under shear may be performed by any convenient means for forming an aqueous emulsion, such as sonication and with subsequent microfluidization. Equipment for mixing under shear, such as sonicators, homogenizers, microfluidizers, and speedmixers are known in the art and are commercially available. Without wishing to be bound by theory, it is thought that mixing under shear may be used to obtain a submicron particle size in the emulsion. In step (1), starting materials comprising (A), (B), (C), and (F) (and when present (G), (H), and (K)) copolymerize to form (I) the silicone - (meth)acrylate copolymer in the aqueous emulsion with starting materials (D) and (E) (and when present, (J) the inhibitor).

Alternatively, the copolymer described above may be prepared by a method comprising dissolving one or more of the starting materials in an organic solvent (such as a monohydric alcohol) and copolymerizing starting materials (A), (B), (C), (F), and when present (G) the chain transfer agent and/or (H) the additional monomer in a process such as that disclosed in U.S. Patent 10,047,199 to Iimura et al. by varying appropriate starting materials and their amounts. The resulting copolymer may be solvent borne. All or a portion of the solvent may be removed by any convenient means, such as by stripping or distillation with heat and optionally reduced pressure. The copolymer may be emulsified using (D) the surfactant and (E), the water, and the other starting materials from step (2) of the method described above. The starting materials for making the copolymer, and the emulsion formulation comprising the copolymer, are further described below.

(A) Crystallizable Monomer

Starting material (A) used to prepare the copolymer is a crystallizable monomer of formula (A-1):

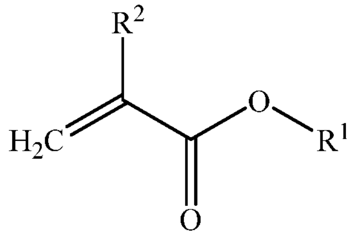

,

where $R^1$ and $R^2$ are as described above. Examples of crystallizable monomers for starting material (A) include stearyl (meth)acrylate, eicosyl (meth)acrylate, behenyl (meth)acrylate, and combinations thereof. Alternatively, when $R^2$ is hydrogen, starting material (A) may be an acrylate selected from stearyl acrylate, eicosyl acrylate, behenyl acrylate, and combinations thereof. Alternatively, starting material (A) may be stearyl acrylate. Crystallizable monomers suitable for starting material (A) are commercially available, e.g., from Millipore Sigma of St. Louis, Missouri, USA and from BASF SE of Ludwigshafen, Germany. Crystallizable means that the starting monomer has a melting point ) ≥ 25 °C ± 5 °C.

Starting material (A) is used in an amount of 80% to 98%, based on combined weights of starting materials (A) the crystallizable monomer, (B) the silicone - (meth)acrylate macromonomer, and (C) the crosslinkable (meth)acrylate monomer, and when present (H) the additional monomer and/or (K) the reactive surfactant. The amount of starting material (A) may be at least 80%, alternatively at least 81%, alternatively at least 82%, alternatively at least 83%, alternatively at least 84%, alternatively at least 85%, alternatively at least 86%, alternatively at least 87%, and alternatively at least 88% on the same basis. At the same time, the amount of starting material (A) may be up to 93%, alternatively up to 92%, alternatively up to 91%, alternatively up to 90%, alternatively up to 89%, and alternatively up to 88, on the same basis. Alternatively, the amount of starting material (A) may be 84% to 92%, alternatively 85% to 91%, alternatively 86% to 90%, alternatively 87% to 89%, and alternatively 88%; on the same basis.

(B) Silicone - (Meth)acrylate Macromonomer

Starting material (B) is a silicone - (meth)acrylate macromonomer of formula

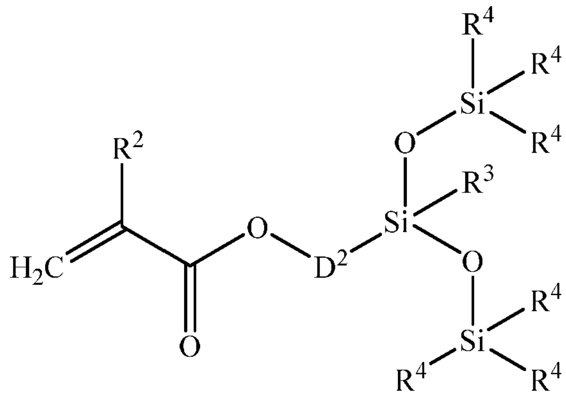

,

where $R^2$, $R^3$, $R^4$, and $D^2$ are as described above.

Alternatively, starting material (B) may have a formula selected from the group consisting of:

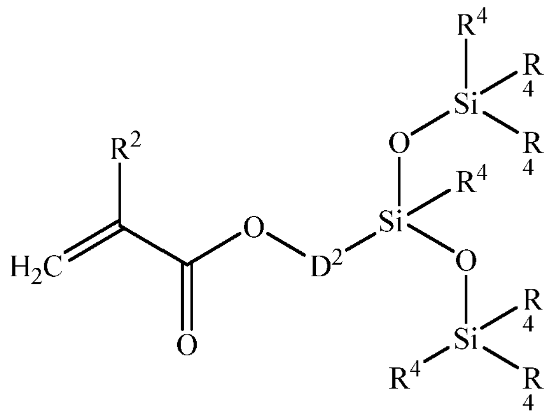

and

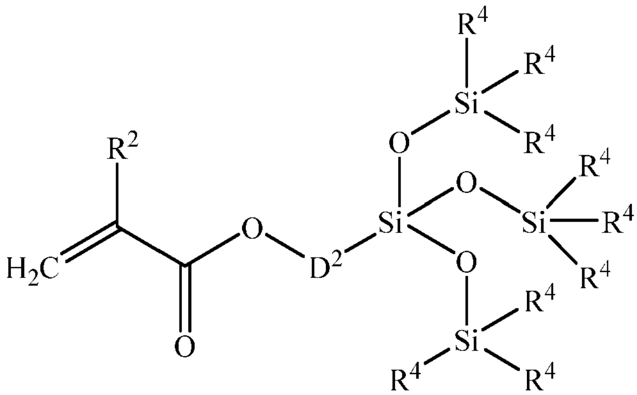

,

where $R^2$, $D^2$, and $R^4$ are as described above.

Alternatively, starting material (B) may have formula:

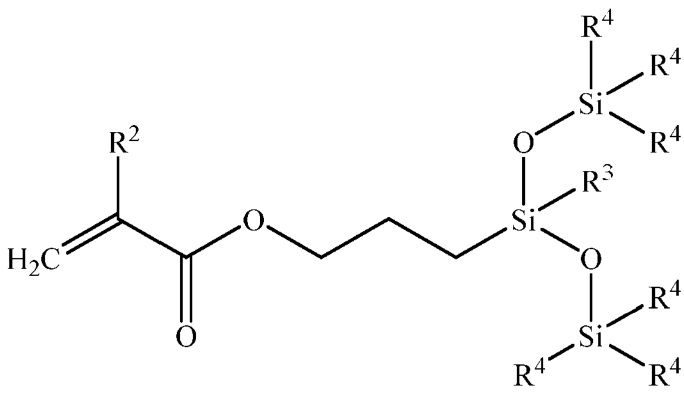

,

where $R^2$, $R^3$ and $R^4$ are as described above. Alternatively, starting material (B) may have a formula selected from the group consisting of:

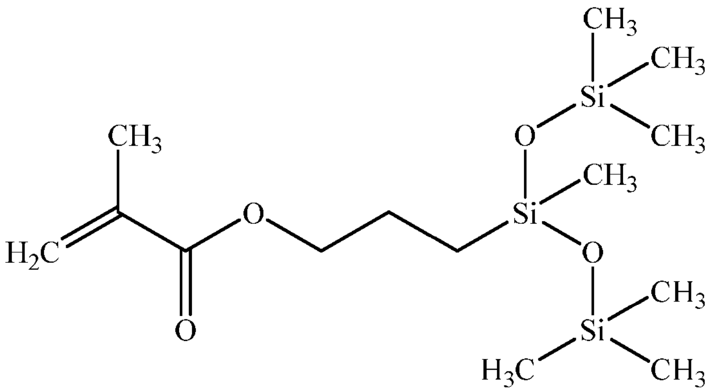

3-(1,1,1,3,5,5,5-heptamethyltrisiloxan-3-yl)propyl methacrylate, and

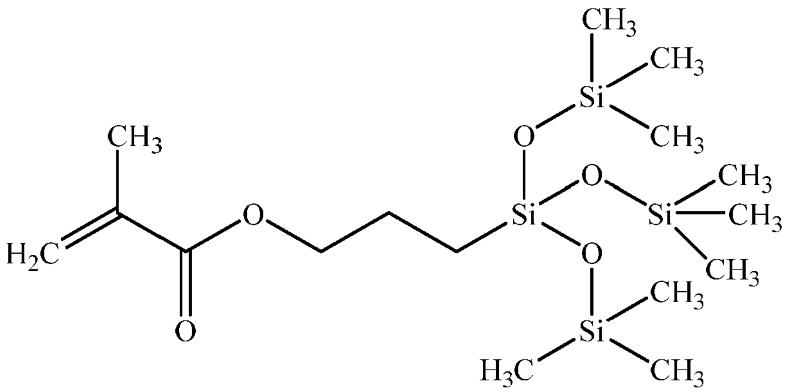

3-(1,1,1,5,5,5-hexamethyl-3-((trimethylsilyl)oxy)trisiloxan-3-yl)propyl methacrylate.

Starting material (B) may be prepared by known methods, such as those disclosed in PCT Publication WO2020/142388 and U.S. Patent 6,420,504.

Starting material (B) is used in an amount of 1% to 15%, based on combined weights of starting materials (A), (B), and (C), and when present (H) the additional monomer and/or (K) the reactive surfactant. Alternatively, starting material (B) may be used in an amount of at least 5%, alternatively at least 6%, alternatively at least 7%, alternatively at least 8%, alternatively at least 9%, and alternatively at least 10%, on the same basis. At the same time, starting material (B) may be present in an amount up to 15%, alternatively up to 14%, alternatively up to 13%, alternatively up to 12%, alternatively up to 11%, and alternatively up to 10%, on the same basis. Alternatively, the amount of starting material (B) may be 6% to 14%, alternatively 7% to 13%, alternatively 8% to 12%, alternatively 9% to 11%, and alternatively 10%, on the same basis described above.

<u>(C) Crosslinkable (Meth)acrylate Monomer</u>

Starting material (C) is a crosslinkable (meth)acrylate monomer of formula (C-1):

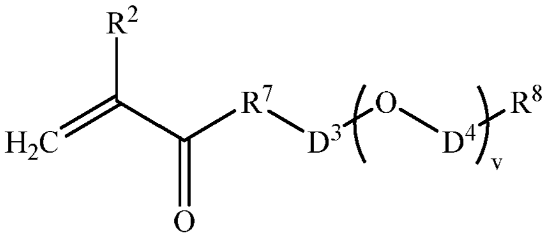

,

where $R^2$, $R^7$, $D^3$, $R^8$, and subscript v are as described above. Examples of suitable crosslinkable (meth)acrylates for starting material (C) include (2-acetoacetoxy)ethyl methacrylate, hydroxybutyl (meth)acrylate, hydroxyethyl (meth) acrylate, hydroxyethylcaprolactone (meth)acrylate, hydroxypropyl (meth)acrylate, ureido (meth)acrylate, glycidyl (meth)acrylate (GMA), poly(ethylene glycol) (meth)acrylate (PEGMA), and combinations thereof. The ureido (meth)acrylate monomer may have formula:

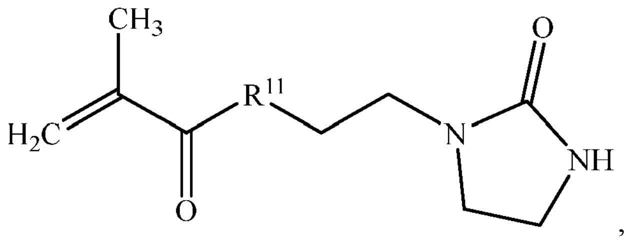

where $R^{11}$ is an oxygen atom or an NH moiety. Examples of ureido monomers are known in the art and are disclosed, for example, in U.S. Patent 9,212,292 to Pressley, et al. Other crosslinkable (meth)acrylate monomers are known in the art and are commercially available, e.g., from BASF SE. Other crosslinkable (meth)acrylates are commercially available as Sipomer WAM1 and 2.

Starting material (C) is used in an amount 1% to 5%, based on combined weights of starting materials (A), (B), and (C), and when present, (H) and/or (K). The amount of starting material (C) may be at least 1%, alternatively at least 1.25%, alternatively at least 1.5%, alternatively at least 1.75%, and alternatively at least 2%, on the same basis. At the same time, the amount of starting material (C) may be up to 5%, alternatively up to 4%, alternatively up to 3%, alternatively up to 2.75%, alternatively up to 2.5%, and alternatively up to 2.25%, on the same basis. Alternatively, the amount of starting material (C) may be 1% to 3%, alternatively 1% to 2%, alternatively 1.5% to 2.5%, alternatively 1.75% to 2.25%, and alternatively 2%; on the same basis.

Starting Material (D) Surfactant

Starting material (D) is a surfactant. The surfactant used in copolymerizing in step (1) of the process for making the aqueous emulsion is not specifically restricted and may be selected from the group consisting of anionic surfactants, amphoteric surfactants, cationic surfactants, nonionic surfactants, and combinations of two or more thereof.

The anionic surfactants include (i) sulfonic acids and their salt derivatives, including alkyl, aralkyl, alkyl naphthalene, alkyl diphenyl ether sulfonic acids, and their salts, having at least 6 carbon atoms in the alkyl substituent, such as dodecyl benzene sulfonic acid, and its sodium salt or its amine salt; (ii) alkyl sulfates having at least 6 carbon atoms in the alkyl substituent, such as sodium lauryl sulfate; (iii) the sulfate esters of polyoxyethylene monoalkyl ethers; (iv) long chain carboxylic acid surfactants, such as lauric acid, steric acid, oleic acid, and their alkali metal and amine salts. Some other examples of anionic surfactants are alkali metal sulfosuccinates; sulfonated glyceryl esters of fatty acids such as sulfonated monoglycerides of coconut oil acids; salts of sulfonated monovalent alcohol esters such as sodium oleyl isothionate; amides of amino sulfonic acids such as the sodium salt of oleyl methyl tauride; sulfonated products of fatty acid nitriles such as palmitonitrile sulfonate; sulfonated aromatic hydrocarbons such as sodium alpha-naphthalene monosulfonate; condensation products of naphthalene sulfonic acids with formaldehyde; sodium octahydro anthracene sulfonate; alkali metal alkyl sulfates; ether sulfates having alkyl groups of eight or more carbon atoms such as sodium lauryl ether sulfate; and alkylaryl sulfonates having one or more alkyl groups of eight or more carbon atoms such as neutral salts of hexadecylbenzene sulfonic acid and $C_{20}$ alkylbenzene sulfonic acid.

Commercial anionic surfactants which can be used include the sodium salt of dodecyl benzene sulfonic acid sold under the trademark STPONATE™ DS-10 by Alcolac Inc., Baltimore, Maryland; sodium salt of alkyl alkoxylate sulfate sold under the trademark DOWFAX™ AS-801 by The Dow Chemical Company of Midland, Michigan, USA; sodium n-hexadecyl diphenyloxide disulfonate sold under the trademark DOWFAX™ 8390 by The Dow Chemical Company, Midland, Michigan; the sodium salt of a secondary alkane sulfonate sold under the trademark HOSTAPUR™ SAS 60 by Clariant Corporation, Charlotte, North Carolina; N-acyl taurates such as sodium N-lauroyl methyl taurate sold under the trademark NIKKOL LMT™ by Nikko Chemicals Company, Ltd., Tokyo, Japan; and linear alkyl benzene sulfonic acids sold under the trademark BIO-SOFT™ S-100 by the Stepan Company, Northfield, Illinois. Compositions of the latter type such as dodecyl benzene sulfonic acid, although a catalyst as noted above, can also function as the anionic surfactant when neutralized. Other suitable surfactants include sodium alkyl sulfonate such as HOSTAPUR™ SAS-30, and triethanolamine dodecyl benzene sulfonate, such as BIO-SOFT™ N 300.

Suitable amphoteric surfactants include amino acid surfactants, betaines (e.g., lauryl betaine, bis-(2-hydroxyethyl) tallow betaine, cocamidopropylbetaine, N-alkylamidobetaines, and derivatives thereof), proteins and derivatives thereof, glycinates (glycine derivatives, such as cocamphoglycinate, cocamphocarboxy-glycinates, and cocamphodipropionate), sultaines (e.g., cocamidopropylhydroxysultaine and lauryl sultaine), alkyl aminopropionates, alkyl polyaminocarboxylates and alkylamphoacetates, lecithin and hydrogenated lecithin, and combinations thereof. These surfactants may are commercially available from various suppliers under different tradenames. For

example, REWOTERIC™ AM TEG is produced by Evonik of Essen, Germany; AMPHOSOL™ CG is available from Stepan Company of Northfield, Illinois, USA.

Alternatively, (D) the surfactant used in copolymerizing in step (1) may be selected from the group consisting of (D-1) an anionic surfactant as described above, (D-2) a cationic surfactant, (D-3) a nonionic surfactant, (D-4) an amphoteric surfactant, as described above, and (D-5) a combination of two or more of (D-1) to (D-4). Cationic surfactants useful herein include compounds containing quaternary ammonium hydrophilic moieties in the molecule which are positively charged, such as quaternary ammonium salts, which may be represented by formula (D-2-1): $R^{12}R^{13}R^{14}R^{15}N^{+}X'^{-}$ where $R^{12}$ to $R^{15}$ are alkyl groups containing 1-30 carbon atoms, or alkyl groups derived from tallow, coconut oil, or soy; and X' is a halogen, e.g., chlorine or bromine. Alternatively, the quaternary ammonium compounds may be alkyl trimethylammonium and dialkyldimethylammonium halides, or acetates, having at least 8 carbon atoms in each alkyl substituent. Dialkyl dimethyl ammonium salts can be used and are represented by formula (D-2-2): $R^{16}R^{17}N^{+}(CH_3)_2X'^{-}$ where $R^{16}$ and $R^{17}$ are alkyl groups containing 12-30 carbon atoms or alkyl groups derived from tallow, coconut oil, or soy; and X' is halogen. Monoalkyl trimethyl ammonium salts can be used and are represented by formula (D-1-3): $R^{18}N^{+}(CH_3)_3X''^{-}$ where $R^{18}$ is an alkyl group containing 12-30 carbon atoms or an alkyl group derived from tallow, coconut oil, or soy; and X" is halogen or acetate.

Representative quaternary ammonium halide salts are dodecyltrimethyl ammonium chloride/lauryltrimethyl ammonium chloride (LTAC), cetyltrimethyl ammonium chloride (CTAC), hexadeclyltrimethyl ammonium chloride, didodecyldimethyl ammonium bromide, dihexadecyldimethyl ammonium chloride, dihexadecyldimethyl ammonium bromide, dioctadecyldimethyl ammonium chloride, dieicosyldimethyl ammonium chloride, and didocosyldimethyl ammonium chloride. These quaternary ammonium salts are commercially available under trademarks such as ADOGEN™, ARQUAD™ TOMAH™, and VARIQUAT™.

Other suitable cationic surfactants which can be used include fatty acid amines and amides and their salts and derivatives, such as aliphatic fatty amines and their derivatives. Such cationic surfactants that are commercially available include compositions sold under the names ARQUAD™ T27 W, ARQUAD™ 16-29, by Akzo Nobel Chemicals Inc., Chicago, Illinois; and Ammonyx Cetac-30 by the Stepan Company, Northfield, Illinois, USA.

The amount of (D-2) the cationic surfactant may be 0.1% to 5%, based on weight of (I) the silicone - (meth)acrylate copolymer in the aqueous emulsion. Alternatively, the amount of cationic surfactant may be at least 0.1%, alternatively at least 0.2%, alternatively at least 0.3%, alternatively at least 0.4%, alternatively at least 0.5%; while at the same time the amount of cationic surfactant may be up to 5%, alternatively up to 4%, alternatively up to 3%, alternatively up to 2%, alternatively up to 1%, on the same basis. Alternatively, the amount of cationic surfactant may be 0.2% to 4%, alternatively 0.3% to 3%, alternatively 0.4% to 2.5%, and alternatively 0.5% to 2%; on the same basis.

Alternatively, (D) the surfactant used in copolymerizing in step (1) may be (D-3) a nonionic surfactant. Some suitable nonionic surfactants which can be used include polyoxyalkylene copolymers, such as polyoxyethylene alkyl ethers, polyoxyethylene alkylphenol ethers, alkyl glycosides (e.g., alkylglucosides), polyoxyethylene fatty acid esters, polyoxyethylene lauryl ethers, sorbitan fatty acid esters, polyoxyethylene sorbitan fatty acid esters, polyoxyethylene sorbitan monooleates, polyoxyethylene alkyl esters, polyoxyethylene sorbitan alkyl esters, polyethylene glycol (such as polyethylene glycol having 23 ethylene-oxide units), polypropylene glycol, diethylene glycol, ethoxylated trimethylnonanols, tristyrylphenol ethers (TSP's), distyryl phenol ethers (DSP's), and polyoxyalkylene glycol modified polysiloxane surfactants. Nonionic surfactants which are commercially available include compositions such as (i) 2,6,8-trimethyl-4-nonyl polyoxyethylene ether sold under the names TERGITOL™ TMN-6 and TERGITOL™ TMN-10; (ii) the $C_{11-15}$ secondary alcohol ethoxylates such as those sold under the names TERGITOL™ 15-S-7, TERGITOL™ 15-S-9, TERGITOL™ 15-S-12, TERGITOL™ 15-S-15, TERGITOL™ 15-S-20, TERGITOL™ 15-S-30, and TERGITOL™ 15-S-40, by the Dow Chemical Company, of Midland, Michigan, USA; octylphenyl polyoxyethylene (40) ether sold under the name TRITON™ X405 by the Dow Chemical Company; (iii) nonylphenyl polyoxyethylene (10) ether sold under the name MAKON™ 10 by the Stepan Company; (iv) ethoxylated alcohols sold under the name Trycol 5953 by Henkel Corp./Emery Group, of Cincinnati, Ohio, USA; (v) ethoxylated alcohols sold under the name BRIJ™ L23 (polyoxyethylene 23 lauryl ether or Laureth-23) and BRIJ™ L4 by Croda Inc. of Edison, New Jersey, USA, (vi) alkyl-oxo alcohol polyglycol ethers such as GENAPOL™ UD 050, and GENAPOL™ UD110, (vii) alkyl polyethylene glycol ether based on C10-Guerbet alcohol and ethylene oxide such as LUTENSOL™ XP 79; (viii) other alcohol ethoxylates, for example, $C_{11-15}$ alkyl alcohol ethoxylate with tradename ECOSURF™ EH, such as ECOSURF™ EH-40, from TDCC. TSPs and DSP's are commercially available from Stepan.

Suitable nonionic surfactants also include poly(oxyethylene)-poly(oxypropylene)-poly(oxyethylene) tri-block copolymers. Poly(oxyethylene)-poly(oxypropylene)-poly(oxyethylene) tri-block copolymers are also commonly known as *Poloxamers.* They are nonionic triblock copolymers composed of a central hydrophobic chain of polyoxypropylene (poly(propylene oxide)) flanked by two hydrophilic chains of polyoxyethylene (poly(ethylene oxide)). Poly(oxyethylene)-poly(oxypropylene)-poly(oxyethylene) tri-block copolymers are commercially available from BASF of Florham Park, New Jersey, USA, and are sold under the tradename PLURONIC™, such as PLURONIC™ L61, L62, L64, L81, P84.

The nonionic surfactant may also be a silicone polyether (SPE). The silicone polyether as an emulsifier may have

a rake type structure wherein the polyoxyethylene or polyoxyethylene-polyoxypropylene copolymeric units are grafted onto the siloxane backbone, or the SPE can have an ABA block copolymeric structure wherein A represents the polyether portion and B the siloxane portion of an ABA structure. Suitable SPE's include DOWSIL™ OFX-5329 Fluid from Dow Silicones Corporation of Midland, Michigan, USA. Alternatively, the nonionic surfactant may be selected from polyoxyalkylene-substituted silicones, silicone alkanolamides, silicone esters and silicone glycosides. Such silicone-based surfactants may be used to form such aqueous emulsions and are known in the art, and have been described, for example, in U.S. Patent 4,122,029 to Gee et al., U.S. Patent 5,387,417 to Rentsch, and U.S. Patent 5,811,487 to Schulz et al.

Starting material (D-3) the nonionic surfactant may be delivered in a dilution, and the amount used may be sufficient to provide 0.1% to 10% of the surfactant, based on weight of (I) the silicone - (meth)acrylate copolymer in the aqueous emulsion. Alternatively, the amount of nonionic surfactant may be at least 0.1%, alternatively at least 0.2%, alternatively at least 0.3%, alternatively at least 0.4%, alternatively at least 0.5%, alternatively at least 1%; while at the same time the amount of nonionic surfactant may be up to 10%, alternatively up to 5%, alternatively up to 4%, alternatively up to 3%, alternatively up to 2%, alternatively up to 1%, on the same basis. Alternatively, the amount of nonionic surfactant may be 0.2% to 4%, alternatively 0.3% to 3%, alternatively 0.4 to 2.5%, and alternatively 1% to 2%; on the same basis. Alternatively, starting materials (D-1) the anionic surfactant, (D-2) the cationic surfactant, and (D-3) the nonionic surfactant may be present in combined amounts ≤ 10%, based on weight of (I) the silicone - (meth)acrylate copolymer in the aqueous emulsion.

Starting Material (E) Water

Starting material (E) is water. The water is not generally limited, for example, the water may be processed or unprocessed. Examples of processes that may be used for purifying the water include distilling, filtering, deionizing, and combinations of two or more thereof, such that the water may be deionized, distilled, and/or filtered. Alternatively, the water may be unprocessed (e.g. may be tap water, i.e., provided by a municipal water system or well water, used without further purification). The amount of water is sufficient to form an aqueous emulsion for copolymerizing in step (1) of the process described above. The amount of water used in step (1) varies depending on various factors including the types and amounts of starting materials (A), (B), and (C), and whether (H) the additional monomer is present. However, the water may be added in an amount of 20% to 97%, alternatively 30% to 90%, and alternatively 40% to 80%, alternatively 50% to 97%, alternatively 50% to 90%, and alternatively 60% to 80%; based on combined weights of all starting materials in step (1). Alternatively, the water may be added in an amount of at least 20%, alternatively at least 30%, alternatively at least 40%, alternatively at least 50%, and alternatively at least 60%; while at the same time the amount of water may be up to 97%, alternatively up to 96%, alternatively up to 95%, and alternatively up to 80%, on the same basis.

Without wishing to be bound by theory, it is thought that starting materials (A), (B), and (C), and when present (H) and/or (K), copolymerize to form (I) the silicone - (meth)acrylate copolymer described above as starting material (I) in the emulsion formulation suitable for treating the textile. It is further thought that starting materials (D) surfactant and (E) water do not participate in the copolymerization reaction, however, a copolymer including one or both of starting materials (D) and (E) is not excluded from the scope herein.

Additional water may be added after step (1). For example, the aqueous emulsion prepared as described above may be diluted with additional water to achieve a desired amount of starting materials before preparing the emulsion formulation and/or treating a textile with the emulsion formulation. Starting material (III), the water, in the emulsion formulation suitable for treating the textile may be the same as (E) the water described above, and may be introduced when the emulsion copolymerization process described above is used to prepare the aqueous emulsion in step (1).

(F) Initiator

Starting material (F), an initiator, is also added to facilitate copolymerizing in step (1) described above. Suitable initiators include azo compounds and peroxide compounds. For example, the azo compound may be an aliphatic azo compound such as 1-t-amylazo-l-cyanocyclohexane, azo-bis-isobutyronitrile and 1-t-butylazo-cyanocyclohexane, 2,2'-azo- bis-(2-methyl)butyronitrile, 2,2'-azobis(2-methylpropionitrile), 2,2'-azobis(2-methylpropionamidine) dihydrochloride, 2,2'-azobis(cyanovaleric acid), or a combination of two or more thereof. Azo compounds are known in the art and are commercially available, e.g., under the tradename VAZO™ WSP from The Chemours Company of Wilmington, Delaware, USA. The peroxide compound may be a peroxide or a hydroperoxide, such as t-butylperoctoate, t-butyl perbenzoate, dicumyl peroxide, di-t-butyl peroxide, t-butyl hydroperoxide, cumene hydroperoxide, di-t-amyl peroxide and combinations of two or more thereof. Additionally, di-peroxide initiators may be used alone or in combination with other initiators. Such di-peroxide initiators include, but are not limited to, 1,4-bis-(t-butyl peroxycarbo)cyclohexane, 1,2-di(t-butyl peroxy)cyclohexane, and 2,5-di(t-butyl peroxy)-3-hexyne. Suitable peroxide compounds are known in the art and are commercially available from various sources, such as Sigma-Aldrich, Inc. Alternatively, the initiator may comprise isoascorbic acid.

An initiator may be used alone as starting material (F). Alternatively, starting material (F) may be a redox pair, which comprises an initiator as the oxidizing component and a reducing component. Alternatively, a redox pair including isoascorbic acid and a hydrophobic organic hydroperoxide such as t-amyl hydroperoxide or t-butyl hydroperoxide may be used as starting material (F). Examples of suitable initiators and/or redox pairs for starting material (F) are disclosed in U.S. Patent 6,576,051 to Bardman et al., beginning at col. 11, line 16. How the initiator is added depends on various factors including whether the initiator is water soluble and the type of initiator (e.g., whether a thermal initiator or a redox pair is used). Typically, when a thermal initiator is used, all the initiator is added at once at the beginning of step (1). Alternatively, when a redox pair is used, it may be metered in over time. The initiator (F) may be used in an amount sufficient to provide 0.01% to 3%, alternatively 0.1% to 1.5%, based on weight of (I) the silicone - (meth)acrylate copolymer.

(G) Chain Transfer Agent

An additional starting material that may be added to facilitate copolymerizing in step (1) of the process described above comprises (G) a chain transfer agent. Suitable chain transfer agents include mercaptans such as alkyl mercaptans, e.g., n-octyl mercaptan, n-dodecyl mercaptan, dodecyl mercaptan (dodecane thiol), and/or 2,2-dimethyldecyl mercaptan. Alternatively, the chain transfer agent may be water soluble, such as mercaptoacetic acid and/or 2-mercaptoethanol. Suitable chain transfer agents are known in the art and have been disclosed, for example, in "Radical Polymerization in Industry" by Peter Nesvadba, Performance Chemical Research, GASF Schweiz AG, Basel, Switzerland, Encyclopedia of Radicals in Chemistry, Biology and Materials, Online © 2012 John Wiley & Sons, Ltd.

Starting material (G), the chain transfer agent, is optional and may be added in an amount of 0 to 10%, based on combined weights of starting materials (A), (B), and (C) (and when present (H) and/or (K)). Alternatively, (G) the chain transfer agent may be used in an amount of 5% to 10% on the same basis.

(H) Additional Monomer

Starting material (H) is an optional additional monomer that may be added for copolymerizing in step (1). Starting material (H) may be a non-crystallizable monomer that is distinct from starting materials (A), (B), and (C), described above. The additional monomer, when present, may be used in an amount of > 0 to 18 weight % based on weight of (I) the silicone - (meth)acrylate copolymer. Suitable monomers include (meth)acrylate monomers such as methyl methacrylate, t-amyl methacrylate, butyl (meth)acrylate such as t-butyl methacrylate, cyclohexyl (meth)acrylate, iso-decyl (meth)acrylate, isobornyl(meth)acrylate, 2-naphthyl acrylate, benzyl (meth)acrylate, 2-ethylhexyl(meth)acrylate, and combinations of two or more thereof. Alternatively the additional monomer may be styrene or vinyl chloride. Suitable monomers for starting material (H) are known in the art and are commercially available, e.g., from Polysciences, Inc. Alternatively, the additional monomer (H) may be selected from the group consisting of isobornyl methacrylate (IBMA), isobornyl acrylate (IBA), and a combination thereof. The additional monomer is optional, and may be present in an amount of 0 to 18%, based on combined weights of starting materials (A), (B), and (C), and when present (H) and (K). Alternatively, (H) the additional monomer may be present in an amount of at least 0.5%, alternatively at least 1%, and alternatively at least 2%; while at the same time the additional monomer may be present in an amount up to 18%, alternatively up to 15%, alternatively up to 10%, alternatively up to 8%, and alternatively up to 5%, on the same basis. Alternatively, the amount of (H) the additional monomer may be > 0 to 18%, alternatively 0.5% to 7%, alternatively 1% to 6%, and alternatively 2% to 5%, on the same basis.

(J) Inhibitor

Starting material (J) is an inhibitor that may optionally be added in step (1) of the process described above. When present, starting material (J), the inhibitor, may be used in an amount > 0 to < 0.01% based on weight of (I) the silicone - (meth)acrylate copolymer, alternatively > 0 to < 2,000 ppm, alternatively 1 ppm to 1818 ppm, alternatively 10 ppm to 500 ppm, on the same basis. Suitable inhibitors for starting material (J) are commercially available, and include, for example, nitrobenzene, butylated hydroxyl toluene, diphenyl picryl hydrazyl (DPPH), p-methoxyphenol, 2,4-di-t-butyl catechol, phenothiazine, N,N-diethylhydroxylamine, salts of N-nitroso phenylhydroxylamine, (2,2,6,6-tetramethylpiperidin-1-yl) oxidanyl (TEMPO), and 4-hydroxy-(2,2,6,6-tetramethylpiperidin-1-yl)oxidanyl (4-hydroxy TEMPO).

(K) Reactive Surfactant

Starting material (K) is an optional reactive surfactant that may be used to facilitate emulsion copolymerization, and that may react to form part of the copolymer. The reactive surfactant may have formula:

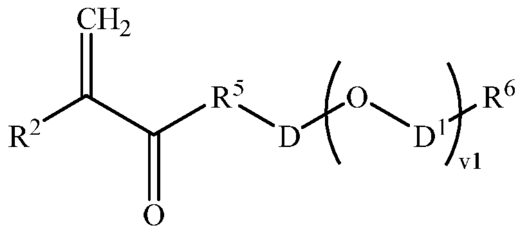

,

where $R^2$, $R^5$, D, $D^1$, and $R^6$ are as described above, and subscript v1 has a value sufficient to give the reactive surfactant a number average molecular weight of 300 to 950 g/mole, alternatively 350 g/mol to 900 g/mole. For example, a reactive surfactant of formula

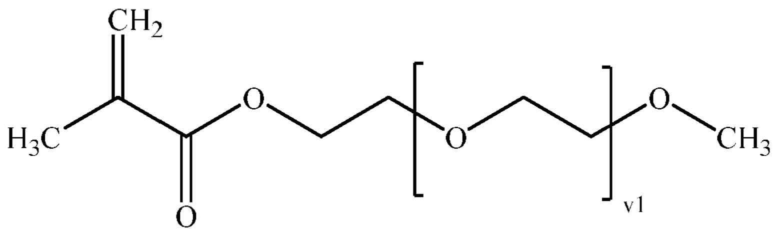

,'

where subscript v1 has a value sufficient to give the reactive surfactant a number average molecular weight of 300 g/mol to 950 g/mol is commercially available from Sigma-Aldrich, Inc. of St. Louis, Missouri, USA. The reactive surfactant is optional and may be added in an amount of 0 to 5 weight % based on combined weights of starting materials (A), (B), and (C), and when present (H), and (K). Reactive surfactants are commercially available, e.g., from Ethox. Alternatively, the reactive surfactant may be added in an amount of > 0 to 2 weight % on the same basis.

Method for Preparing Emulsion Formulation Suitable for Treating a Textile

The copolymer prepared as described above and/or the aqueous emulsion prepared by the process comprising step (1), described above, can be used to prepare the emulsion formulation suitable for treating the textile, described above. For example, preparing the emulsion formulation may be performed by a process comprising mixing starting materials comprising (I) the copolymer, (II) the nonionic surfactant, (III) the water (which may be as described above for starting material (E)), and (IV) the water dispersible crosslinker under shear (e.g., when the copolymer is formed by the alternative method described above, e.g., by a method comprising dissolving one or more of the starting materials in an organic solvent and copolymerizing starting materials (A) the crystallizable monomer, (B) silicone - (meth)acrylate macromonomer, (C) the crosslinkable monomer, (F) the initiator, and when present (G) the chain transfer agent and/or (H) the additional monomer with subsequent solvent removal). Mixing under shear may be performed by any convenient means for forming an aqueous emulsion formulation, such as sonication and with subsequent microfluidization. Equipment for mixing under shear, such as sonicators, homogenizers, microfluidizers, and speedmixers are known in the art and are commercially available.

In the emulsion formulation, (II) the nonionic surfactant comprises an alcohol alkoxylate of formula (II-1)

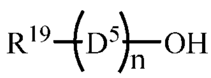

,

where $R^{19}$ is a branched or linear alkyl group with 8 to 15 carbon atoms, subscript n is at least 23, and each $D^5$ is an independently selected alkylene oxide group of 2 or more carbon atoms. Alternatively, $R^{19}$ may be, for example, 2-ethylhexyl, lauryl, or other alkyl group of 8 to 15 carbon atoms. Alternatively, subscript n may be 23 to 40, alternatively 23 to 30. Alternatively, each $D^5$ may be independently selected from the group consisting of ethylene oxide and propylene oxide. Alternatively, each $D^5$ may be ethylene oxide. Suitable alcohol ethoxylates of the formula above include $C_{11-15}$ secondary alkyl alcohol ethoxylate (such as TERGITOL™ 15-S-30 or 15-S-40, as described above); 2-ethylhexyl primary alcohol alkoxylate, (such as 2-ethylhexyl ethylene oxide/propylene oxide, sold under the tradename ECOSURF EH-30 and ECOSURF EH-40 as described above), a $C_{12-40}$ primary alcohol ethoxylate (such as laureth-23, sold under the tradename BRIJ™ L23 as described above); or a combination thereof. The emulsion formulation may optionally further comprise an additional nonionic cosurfactant, which may be any of the nonionic surfactants described above as starting material (D-3) that differs from formula (II-1) above.

This process for preparing the emulsion formulation suitable for treating the textile may optionally further comprise adding a further additional starting material. The further additional starting material may be selected from the group consisting of (V) a wax, (VI) a biocide, (VII) additional water (which may be the same as starting material (E)), (VIII) a flame retardant, (IX) a wrinkle reducing agent, (X) an antistatic agent, (XI) a penetrating agent and a combination of two or more of (V) to (XI).

Alternatively, the aqueous emulsion prepared in the process comprising step (1), described above, may be used to prepare the emulsion formulation suitable for treating the textile. To prepare the emulsion formulation, the process described above comprising step (1) further comprises step (2): adding starting material (IV), the water dispersible crosslinker, to the aqueous emulsion. This process for preparing the emulsion formulation suitable for treating the textile may optionally further comprise, after step (1), adding the further additional starting material. The further additional starting material may be selected from the group consisting of (V) a wax, (VI) a biocide, (VII) additional water (which may be the same as starting material (D)), (VIII) a flame retardant, (IX) a wrinkle reducing agent, (X) an antistatic agent, (XI) a penetrating agent and a combination of two or more of (V) to (XI).

Step (2) of this process may be performed by any convenient means, such as mixing using in a jacketed vessel equipped with an agitator. Step (1) and step (2) may be performed sequentially in the same vessel. Alternatively, step (1) and step (2) may be performed in different equipment. Step (1) and/or step (2) may be performed at RT or elevated temperature, *e.g.,* up to 100°C, alternatively 40°C to 80°C. Alternatively, heating may be performed in step (1), and step (2) may be performed at RT. Alternatively, one or both of steps (1) and (2) may be performed at lower temperatures and elevated pressures, such as up to 5 atmospheres.

The process for preparing the emulsion formulation suitable for treating the textile may optionally further comprise adding additional surfactant. Alternatively, when the process for preparing the copolymer includes a surfactant that is not nonionic (e.g., (D-1) the anionic surfactant, (D-4) the amphoteric surfactant, and/or (D-2) the cationic surfactant, described above), the process for preparing the emulsion formulation may further comprise (3): removing (D) the surfactant (used in the process to make the aqueous emulsion comprising the copolymer) and replacing (D) the surfactant with (II) the nonionic surfactant (which may be as described above for D-3). Starting material (D-1) the anionic surfactant, (D-2) the cationic surfactant, and (D-4) the amphoteric surfactant may be removed by any convenient means such as adsorption, contact with an ion exchange resin, and/or filtration, such as diafiltration and/or ultrafiltration. Alternatively, when the process for preparing the copolymer employs as starting material (D-3) a nonionic surfactant other than the nonionic surfactant of formula (II-1) above, the process may further comprise removing all or a portion of starting material (D-3) and replacing with the nonionic surfactant of formula (II-1) by the means as described above.

After the process for preparing the emulsion formulation is complete, the emulsion formulation suitable for treating the textile is free of cationic surfactant. Alternatively, the emulsion formulation may be free of anionic surfactant, amphoteric surfactant, and cationic surfactant. "Free of anionic surfactant, amphoteric surfactant and cationic surfactant" means that the surfactant in the emulsion formulation is only a nonionic surfactant, or the emulsion formulation contains either a non-detectable amount of another surfactant, or an amount of another surfactant insufficient to detrimentally affect the durable water repellency of a textile treated with the emulsion formulation.

In addition to (I) the copolymer, the emulsion formulation suitable for treating the textile comprises (II) nonionic surfactant, which is as described above for starting material (D-3) and (III) water, which is as described above for starting material (E). Starting material (IV) the water dispersible crosslinker, and the further additional starting materials, which may be selected from the group consisting of (V) a wax, (VI) a biocide, (VII) additional water (which may be the same as starting material (D)), (VIII) a flame retardant, (IX) a wrinkle reducing agent, (X) an antistatic agent, (XI) a penetrating agent, are described below.

Starting Material (IV) Water Dispersible Crosslinker

Starting material (IV) is a water dispersible crosslinker (crosslinker) that may be added to the emulsion formulation for treating the textile. Suitable crosslinkers include blocked isocyanates, polycarbodiimides, polyepoxy compounds, polycarboxy compounds, polyamines, and diols. The term "blocked isocyanates" encompasses mono-, di- and polyisocyanates in which an isocyanate group has been reacted with a blocking agent, which upon heating, release the isocyanate and the blocking agent. Suitable blocking agents are known in the art such as amines, amides, compounds having an active hydrogen atom, alcohols, or oximes. Blocked isocyanates are commercially available, such as ARKOPHOB™ DAN and ARKOPHOB™ SR from Archroma of Reinach, Switzerland; RUCO-GUARD™ WEB from Rudolf GmbH of Geretsreid, Bayern, Germany, and PHOBOL™ XAN from Huntsman Corporation of the Woodlands, Texas, USA. Diols include, for example, 1,2-propoanediol; 1,3-propanediol; 1,2-butanediol; 1,3-butanediol; 1,4-butanediol; 2,3-butanediol; 2-methyl-1,2-propanediol; 1,5-pentanediol; 2-methyl-2,3-butanediol; 1,6-hexanediol; 1,2-hexanediol; 2,5-hexanediol; 2-methyl-2,4-pentanediol; 2,3-dimethyl-2,3-butanediol; 2-ethylhexanediol; 1,2-octanediol; 1,2-decanediol; 2,2,4-trimethylpentanediol; 2-butyl-2-ethyl-1,3-propanediol; 2,2-diethyl-1,3-propanediol. Examples of suitable crosslinkers are known in the art and are disclosed, for example, in U.S. Patent Application 2017/0204558 to Knaup; U.S. Patent 9,777,105

to Hamajima et al., beginning at col. 11, line 54,. The exact amount of crosslinker (IV) depends on various factors including the type and amount of (I) silicone - (meth)acrylate copolymer and the textile to be treated, however, the weight of the crosslinker (IV) may 0.25% to 3.75% on fabric weight, alternatively 0.25% to 1%, and alternatively 0.25% to 0.5%, on the same basis.

Starting Material (V) Wax

Starting material (V) is a wax, which may optionally be added to provide improved water repellency or softness to the textile to which the emulsion formulation will be applied. The amount of wax will vary depending on factors including the type of wax selected, the benefit desired, and the fabric to be treated with the emulsion formulation. However, the amount of wax may be 0 to 75%, alternatively 0 to 50%, alternatively 25% to 50% based on weight of (I) the silicone - (meth)acrylate copolymer. Alternatively, when used, the amount of wax may be > 0%, alternatively at least 10%, and alternatively at least 25%, while at the same time the amount of wax may be up to 75%, alternatively up to 50% on the same basis. Examples of suitable waxes include paraffin waxes (e.g., n-paraffins, iso-paraffins, and/or cycloparaffins), silicone waxes such as silicone wax with long chain alkyl groups (*e.g.*, alkyl methyl silicone wax) and/or amino-silicone wax, and a combination of two or more thereof. Suitable waxes are disclosed, for example, in U.S. Patent Application 2017/0204558 to Knaup and U.S. Patent 10,844,151 to Probst, et al. Waxes may be delivered as water-based dispersions, for example Michelman wax 743 and others from Michelman of Cincinnati, Ohio, U.S.A. Other waxes are also commercially available, for example, from Sasol Wax of Hamburg, Germany, and silicone waxes, such as DOWSIL™ AMS-C30, are available from Dow Silicones Corporation of Midland, Michigan, U.S.A.

Starting Material (VI) Biocide

Starting material (VI) is an optional biocide. The amount of biocide will vary depending on factors including the type of biocide selected and the benefit desired. However, when used, the amount of biocide may be > 0% to 5% based on the combined weights of all starting materials in the emulsion formulation. Starting material (VI) is exemplified by (VI-1) a fungicide, (VI-2) an herbicide, (VI-3) a pesticide, (VI-4) an antimicrobial agent, or a combination thereof. Suitable biocides are disclosed, for example, in U.S. Patent 9,480,977.

Starting Material (XI) Penetrating Agent

Starting material (XI) is a penetrating agent. Suitable penetrating agents are exemplified by glycol ethers, which are commercially available from The Dow Chemical Company and include DOWANOL™ DPM, TPM, PPh, EPh, Methyl CARBITOL™, and Butyl CARBITOL™.

When selecting starting materials to add to the aqueous emulsion described above in step (1) and the emulsion formulation formed described above, there may be overlap between types of starting materials because certain starting materials described herein may have more than one function. The starting materials used in aqueous emulsion and/or the emulsion formulation, may be distinct from one another.

The emulsion formulation suitable for treating a textile comprises: may be formulated with starting materials that are fluorocarbon-free. For example, the emulsion formulation may be free of any starting material that contains a fluorine atom covalently bonded to a carbon atom.

Process for Treating Textiles

The emulsion formulation prepared as described above may be used for treating a textile. For example, a method for treating a textile comprises: I) coating the textile with the emulsion formulation described above, and II) heating the textile. Step I) may be performed by any convenient method, such as padding, dipping, or spraying the textile with the emulsion formulation. However, the method should be sufficient to deliver on fabric weight of 0.25 weight % to 10 weight % of (I), the silicone - (meth)acrylate copolymer, and on fabric weight of 0.1 weight % to 3.75 weight %, alternatively 0.25% to 1%, of (IV), the water dispersible crosslinker, both based on weight of the textile.

Step II) may be performed by any convenient method, such as placing the textile in an oven. Heating the textile may be performed to remove all or a portion of the water and/or cure the emulsion formulation. The exact temperature depends on various factors including the temperature sensitivity of the type of textile selected and the desired drying time. However, heating may be performed at a temperature > 100 °C to remove water. Alternatively, the temperature may be > 100 °C to 200 °C for a time sufficient to remove all or a portion of the water, de-block the blocked isocyanate crosslinker, and/or cure (I) the silicone - (meth)acrylate copolymer.

The textile to be treated is not specifically restricted. Suitable textiles include naturally derived textiles such as fabrics of cotton, silk, linen, and/or wool; textiles derived from synthetic sources such as rayon, acetate, polyesters,

polyamides (such as Nylons), polyacrylonitriles, and polyolefins such as polyethylenes and/or polypropylenes, and combinations of two or more thereof (e.g., blends such as polyester/cotton blend). The form of the textile is also not specifically restricted. The emulsion formulation described herein is suitable for use on textiles in any form, e.g., woven fabrics, knitted fabrics, or nonwoven textiles.

EXAMPLES

The following examples are provided to illustrate the invention to one skilled in the art and are not to be interpreted as limiting the invention set forth in the claims. Starting materials used herein were as follows. A textile to be treated was Nylon (style # 01194), which was purchased from Burlington and contained 98.61 % of Nylon and 1.39 % of Spandex. The weight was 6.84 Oz/Lin Yd and plain weave. Another textile to be treated was polyester or PES Woven (crepe), also from Burlington, style 4774 075, basis weight 220 g/$m^2$. The water dispersible crosslinker was PhobolXan™ Extender (an oxime-blocked isocyanate emulsion) purchased from Huntsman and used as received. The crystallizable monomer (A-1) was stearyl acrylate, the crosslinkable (meth)acrylate monomer (C-1) was 2-hydroxyethyl methacrylate (HEMA), nonionic surfactant BRIJ™ L23-69 (69% actives), cationic surfactant ARQUAD™ 16-29 (hexadecyltrimethylammonium chloride, 29% actives), nonionic surfactant ECOSURF™ EH40 (75% actives), nonioinic surfactant ECOSURF™ EH9 (100% actives), anionic surfactant DOWFAX 8390 (40% actives), nonionic surfactant TERGITOL™ 15-S-40 (70% actives), cationic surfactant n-dodecyltrimethylammonium bromide (DTAB, 100% actives), chain extender dodecane thiol, initiator isoascorbic acid, initiator t-hydroperoxide (70% actives), 3-(1,1,1,3,5,5,5-heptamethyltrisiloxan-3-yl)propyl methacrylate (MDM-ALMA), and 3-(1,1,1,5,5,5-hexamethyl-3-((trimethylsilyl)oxy)trisiloxan-3-yl)propyl methacrylate (3MT-ALMA) were commercially available and were purchased from commercial sources. A Fisherbrand™ Model 705 sonic dismembrator was used for sonication. The microfluidizer was a Microfluidics Microfluidizer Model 110Y homogenizer.

Initiator solution A was prepared as follows: 0.702 g 70% t-butylhydroperoxide diluted in 45 mL of DI water to form a stock solution. The final solution was made by taking 5 g of this stock solution and mixing with 5 g of DI water.

Initiator solution B was prepared as follows: 0.96 g Isoascorbic acid in 45 mL of DI water to form a stock solution. The final solution was made by taking 5 g of this stock solution and mixing with 5 g of DI water.

In this Reference Example 1, samples of emulsion formulations were prepared as follows. Stearyl acrylate (44 g), either MDM-ALMA or 3MT-ALMA (5, 10 or 15 g) (shown below in Table 1), HEMA (1 g), one or more surfactants (shown below in Table 1), and deionized water (200 g) were placed in a 400 ml jar. In some samples, 0.05 g of dodecanethiol was added (as shown below in Table 1). The mixture was heated in a 40 °C water bath for 10 min to melt the stearyl acrylate. The material was sonicated at an amplitude of 50 for two minutes using a sonicator to create a coarse emulsion. The coarse emulsion was then passed through a microfluidizer operating at 40 °C and 10-15k PSI (1 PSI being 0,0689476 bar). The emulsion was then transferred to a 1000 mL 4 neck flask equipped with a reflux condenser, nitrogen inlet, overhead stirrer (IKA RW20) and thermocouple probe. The emulsion was stirred at 250 RPM using a Teflon blade and heated to 60 °C. After reaching temperature, a redox initiator was fed into the solution at 0.25 mL/min (Initiator Solution A and Initiator Solution B in separate feeds) and after an hour at 60 °C , the resulting emulsion formulation was then allowed to cool to 30 to 40 °C with slow stirring before pouring off.

Table 1. Emulsion Formulations Prepared According To Reference Example 1

| Entry | Fabric | Si-Acrylate (g) | DowFax 8390 (g) | Tergitol 15-s-40 (g) | Brij-L23-69 (g) | Arquad 16-29 (g) | DTAB (g) | EcoSurf EH40 (g) | EcoSurf EH9 (g) |
|---|---|---|---|---|---|---|---|---|---|
| Example 1 | Nylon | 5 g MDM-ALMA | 0 | 0 | 0 | 0 | 0 | 1.67 | 0 |
| Example 2 | Nylon | 5 g 3MT-ALMA | 0 | 0 | 0 | 0 | 0 | 1.67 | 0 |
| Example 3 | PES | 5 g MDM-ALMA | 0 | 0 | 0 | 0 | 0 | 1.67 | 0 |
| Example 4 | PES | 5 g 3MT-ALMA | 0 | 0 | 0 | 0 | 0 | 1.67 | 0 |
| Example 5 | Nylon | 5 g MDM-ALMA | 0 | 0 | 1.66 g | 0 | 0 | 0 | 0 |
| Example 6 | PES | 5 g MDM-ALMA | 0 | 0 | 1.66 g | 0 | 0 | 0 | 0 |

(continued)

| Entry | Fabric | Si-Acrylate (g) | DowFax 8390 (g) | Tergitol 15-s-40 (g) | Brij-L23-69 (g) | Arquad 16-29 (g) | DTAB (g) | EcoSurf EH40 (g) | EcoSurf EH9 (g) |
|---|---|---|---|---|---|---|---|---|---|
| Example 7 | Nylon | 5 g 3MT-ALMA | 0 | 1.78 | 0 | 0 | 0 | 0 | 0 |
| Example 8 | PES | 5 g 3MT-ALMA | 0 | 1.78 | 0 | 0 | 0 | 0 | 0 |
| Example 9 | PES | 7.5 g 3MT-ALMA | 0 | 0 | 0 | 0 | 0 | 1.67 | 0 |
| Example 10 | Nylon | 2.5 g 3MT-ALMA | 0 | 0 | 0 | 0 | 0 | 1.67 | 0 |
| Example 11* | PES | 5 g 3MT-ALMA | 0 | 0 | 0 | 0 | 0 | 1.67 | 0 |
| Example 12* | Nylon | 5 g 3MT-ALMA | 0 | 0 | 0 | 0 | 0 | 1.67 | 0 |
| Example 13 | PES | 5 g MDM-ALMA | 0 | 0 | 0 | 0 | 0 | 1.14 | 0.46 |
| Example 14 | PES | 5 g MDM-ALMA | 0 | 0 | 0 | 0 | 0 | 0.63 | 0.84 |
| Example 15 | PES | 5 g MDM-ALMA | 0 | 0 | 0 | 0 | 0 | 3.34 | 0 |
| Example 16 | PES | 5 g MDM-ALMA | 0 | 0 | 0 | 0 | 0 | 1.13 | 1.86 |
| Example 17 | Nylon | 5 g MDM-ALMA | 0 | 0 | 0.83 g | 2.22 g | 0 | 0 | 0 |
| Example 18 | PES | 5 g MDM-ALMA | 0 | 0 | 0.83 g | 2.22 g | 0 | 0 | 0 |
| Example 19 | PES | 5 g 3MT-ALMA | 0 | 0 | 0.83 g | 2.22 g | 0 | 0 | 0 |
| Example 20 | Nylon | 5 g MDM-ALMA | 2.55 g | 0 | 0 | 0 | 0 | 0 | 0 |
| Example 21 | PES | 5 g MDM-ALMA | 2.55 g | 0 | 0 | 0 | 0 | 0 | 0 |
| Example 22 | PES | 5 g 3MT-ALMA | 0 | 0 | 0.83 g | 0 | 0.63 g | 0 | 0 |

In Table 1, * denotes that the sample also contained 0.5 g of a reactive surfactant of formula:

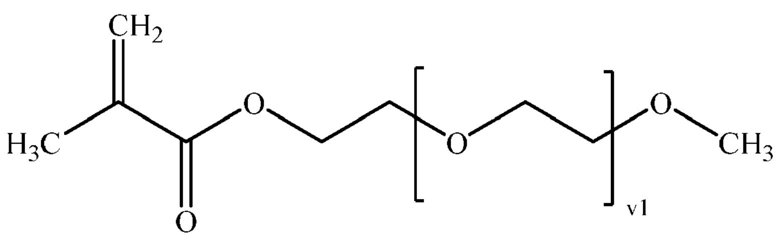

,

where subscript v1 has a value sufficient to give the reactive surfactant an average Mn (number average molecular weight) of 360 g/mol and which was purchased from Sigma-Aldrich, Inc. (Product 409537).

In this Reference Example 2, emulsion formulations for treating the Nylon fabric described above were prepared

combining 37 g of a copolymer emulsion prepared as described above, 6.16 g of PhobolXan™ Extender and 163 g of water in a plastic bottle and shaking by hand to mix to achieve an on fabric wt% of ~2%.

In this Reference Example 3, emulsion formulations for treating the PES fabric described above were prepared by combining 22 g of copolymer emulsion, 4.12 g of PhobolXan™ Extender and 174 g of water in a plastic bottle and shaking by hand to mix to achieve an on fabric wt% of ~2%.

In this Reference Example 4, textiles were coated with the emulsion formulations prepared as described in Reference Examples 2 and 3. Samples were coated using a Mathis HVF padder (roll speed of 2 meter/min at 60 psi). The target weight on Nylon (pickup 53.5%) and PES (pickup 90%) was 2 % of silicone-(meth)acrylate copolymer and 0.5% of PhobolXan™ Extender. Each emulsion formulation was added into padder for coating and placed through a forced air oven at 160 °C for 3 min.

In this Reference Example 5, water repellency and washing durability were evaluated as follows. The coated sheets prepared according to Reference Example 4 were laundered using a 90 °F wash/cold rinse cycle and dried at ~150 °F. This method was repeated 20 times. 37 g of Tide detergent (non-scent) for every 6 pounds of coated sheets was used. ISO-9865 (Bundesmann test) was used collect appearance rating data after 0, 1, 5, 10 and 20 washes. Three values were recorded. The appearance rating was subjective and based on the appearance of the water beading or lack thereof during the test. The appearance was good if it was ≥ 3 and was considered a fail if it was < 3. In addition, the fabric should uptake ≤25 % of its mass after the 10 minute test. To summarize, a durable water-resistant coating with a % water absorption of ≤25% and an appearance rating of ≥ 3 at all tested wash cycles was desired. Results are shown below in Tables 2 and 3.

Table 2. Appearance Ratings from ISO-9865 (Bundesmann Test)

| Emulsion in coating formulation | Rating | | | | |
|---|---|---|---|---|---|
| # of Washings | 0 | 1 | 5 | 10 | 20 |
| Example 1 | 5 | ND | ND | 5 | 4 |
| Example 2 | 5 | 5 | 5 | 5 | 5 |
| Example 3 | 5 | 5 | 4.5 | 4 | 3.5 |
| Example 4 | 5 | 5 | 5 | 4.5 | 4 |
| Example 5 | 5 | 5 | 5 | 5 | 4.5 |
| Example 6 | 5 | 5 | 4.5 | 2.5 | 1.5 |
| Example 7 | 5 | 5 | 5 | 5 | 4 |
| Example 8 | 5 | 5 | 4 | 4 | 3.8 |
| Example 9 | 5 | 5 | 5 | 5 | 5 |
| Example 10 | 5 | 5 | 5 | 5 | 5 |
| Example 11 | 5 | 4 | | 3.5 | 3.5 |
| Example 12 | 5 | 5 | 5 | 4.5 | 4 |
| Example 13 | 5 | 5 | 4 | 4.5 | 3.5 |
| Example 14 | 5 | 5 | 4 | 4 | 2.5 |
| Example 15 | 5 | 5 | 5 | 5 | 4 |
| Example 16 | 5 | 5 | 5 | 5 | 5 |
| Example 17 | 1.5 | 2.5 | 2 | 2.5 | ND |
| Example 18 | 1 | 1 | 1 | 1 | 1 |
| Example 19 | 1 | 2 | 2.5 | 2.5 | 3 |
| Example 20 | 1.5 | 1.5 | 1.5 | 1.5 | 1.5 |
| Example 21 | 1 | 1 | 1 | 1 | 1 |
| Example 22 | 1 | 1.5 | 1.5 | 1 | 1 |

The data in Table 2 show that the Examples containing nonionic surfactant have a Bundesmann appearance rating > 3 under all numbers of washings tested for at least one textile. In contrast, Examples 17, 18, 19, and 22 each contained a cationic surfactant and all failed the appearance test. Examples 20 and 21 each contained an anionic

surfactant, and both failed the appearance test.

Table 3. Water Pickup (%) from ISO-9865 (Bundesmann Test).

| Emulsion in coating formulation | Water Pickup (%) | | | | |
|---|---|---|---|---|---|
| # of Washings | 0 | 1 | 5 | 10 | 20 |
| Example 1 | 7 | ND | ND | 12 | 17 |
| Example 2 | 5 | 9 | 12 | 14 | 14 |
| Example 3 | 5 | 6 | 16 | 18 | 19 |
| Example 4 | 6 | 8 | 14 | 14 | 16 |
| Example 5 | 5 | 10 | 13 | 10 | 17 |
| Example 6 | 8 | 16 | 21 | 32 | 35 |
| Example 7 | 3 | 10 | 12 | 13 | 18 |
| Example 8 | 4 | 7 | 13 | 18 | 24 |
| Example 9 | 4 | 6 | 15 | 19 | 18 |
| Example 10 | 6 | 9 | 9 | 11 | 14 |
| Example 11 | 4 | 14 | | 25 | 20 |
| Example 12 | 3 | 8 | 14 | 14 | 17 |
| Example 13 | 5 | 9 | 17 | 13 | 22 |
| Example 14 | 8 | 11 | 16 | 16 | 28 |
| Example 15 | 3 | 6 | 10 | 11 | 16 |
| Example 16 | 4 | 8 | 14 | 12 | 14 |
| Example 17 | 33 | 21 | 24 | 22 | ND |
| Example 18 | 42 | 47 | 58 | 62 | 60 |
| Example 19 | 59 | 31 | 24 | 30 | 22 |
| Example 20 | 33 | 36 | 43 | 45 | 45 |
| Example 21 | 55 | 62 | 53 | 69 | 60 |
| Example 22 | 38 | 38 | 34 | 63 | 49 |

PROBLEM TO BE ADDRESSED

There is an industry need for non-fluorocarbon based textile treatments that provide durable water repellency. Furthermore, there is an industry need to for fluorocarbon-free textile treatments with high durability as measured by the Bundesmann test, described above.

INDUSTRIAL APPLICABILITY

The above examples show that the emulsion formulation described herein can be used to treat a textile and impart durable water repellency as measured by the Bundesmann test. More specifically, the textile can have both Bundesmann appearance rating $\geq 3$ after initial treatment (0 washings), and after 1 to 10 washings and a Bundesmann water pickup $\leq 25\%$ after initial treatment and after 1 to 10, washings. This combination of properties can be achieved on at least one type of textile, and more than one type of textile for some emulsion formulations.

DEFINITIONS AND USAGE OF TERMS

All amounts, ratios, and percentages herein are by weight, unless otherwise indicated. The articles, "a", "an", and "the" each refer to one or more, unless otherwise indicated by the context of the specification. The transitional phrases "comprising", "consisting essentially of", and "consisting of" are used as described in the Manual of Patent Examining Procedure Ninth Edition, Revision 08.2017, Last Revised January 2018 at section §2111.03 I., II., and III. The use of "for

example," *"e.g.,"* "such as," and "including" to list illustrative examples does not limit to only the listed examples. Thus, "for example" or "such as" means "for example, but not limited to" or "such as, but not limited to" and encompasses other similar or equivalent examples. The abbreviations used herein have the definitions in Table 5.

Table 5 - Abbreviations

| Abbreviation | Definition |
|---|---|
| °C | degrees Celsius |
| °F | degrees Fahrenheit |
| g | grams |
| GPC | Gel permeation chromatography, used to measure molecular weight of copolymers herein according to the method described in the Reference Example, above |
| HEMA | hydroxyethylmethacrylate |
| m | meters |
| (meth)acrylate | class of compound including an acrylate, a methacrylate, or both. |
| min | minutes |
| mL | milliliters |
| Mp | Peak average molecular weight |
| MW | Molecular weight measured by GPC, in units of grams/mole |
| ND | Not determined |
| Oz/Lin Yd | Ounce per linear yard |
| ppm | Parts per million |
| psi or PSI | pounds per square inch |
| PTFE | polytetrafluoroethylene |
| RPM | revolutions per minute |
| RT | room temperature of 25 °C ± 2 °C |
| TDCC | The Dow Chemical Company of Midland, Michigan, USA |
| uL | microliter |
| um | micrometer |

The invention has been described in an illustrative manner, and it is to be understood that the terminology which has been used is intended to be in the nature of words of description rather than of limitation. With respect to any Markush groups relied upon herein for describing particular features or aspects, different, special, and/or unexpected results may be obtained from each member of the respective Markush group independent from all other Markush members. Each member of a Markush group may be relied upon individually and or in combination and provides adequate support for specific embodiments within the scope of the appended claims.

Furthermore, any ranges and subranges relied upon in describing the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and any other subrange subsumed within the range. As just one example, a range of "16 to 24" may be further delineated into a lower third, *i.e.*, 16 to 18, a middle third, *i.e.*, 19 to 21, and an upper third, *i.e.,* from 22 to 24, and alternatively, the range "16 to 24" includes the subrange "18 to 22", each which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit.

## Claims

1. An emulsion formulation suitable for treating a textile, where the emulsion formulation comprises:

(I) a silicone - (meth)acrylate copolymer comprising unit formula

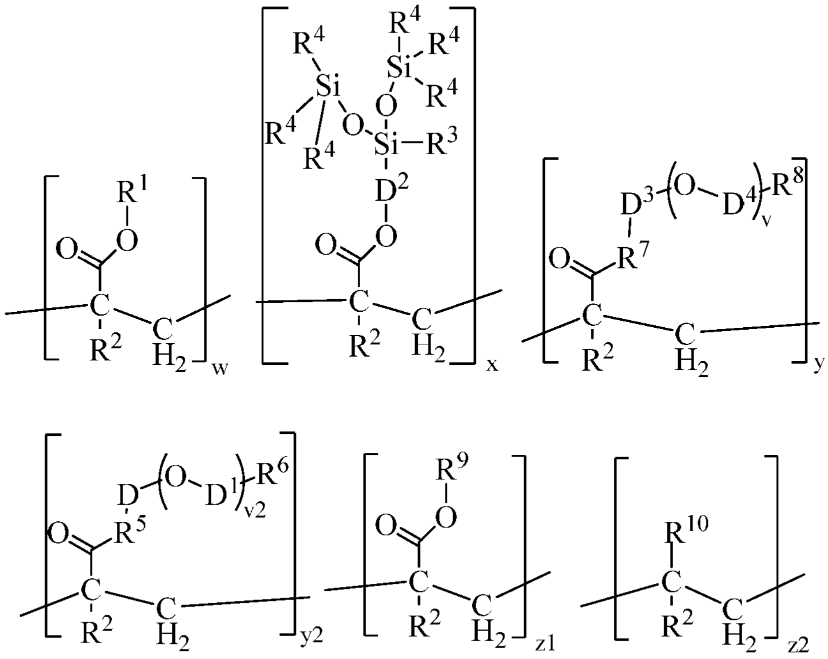

, where

each $R^1$ is an independently selected alkyl group of 16 to 24 carbon atoms;
each $R^2$ is independently selected from the group consisting of H and methyl;
each $D^2$ is a divalent hydrocarbon group of 2 to 12 carbon atoms;
each $R^3$ is independently selected from the group consisting of $R^4$ and a group of formula $-OSi(R^4)_3$;
each $R^4$ is an independently selected monovalent hydrocarbon group of 1 to 12 carbon atoms;
each $R^7$ is independently selected from the group consisting of an oxygen atom and NH;
$D^3$ is a divalent hydrocarbon group of 1 to 12 carbon atoms;
each $D^4$ is an alkylene group of 2 to 4 carbon atoms or a divalent alkylarylene group;
subscript v represents the number of units of formula ($OD^4$) in the unit with subscript y,
subscript v has a value of 0 to 12;
each $R^8$ is a crosslinkable group;
each $R^5$ is oxygen atom;
D is a divalent hydrocarbon group of 1 to 12 carbon atoms;
each $D^1$ is an alkylene group of 2 to 4 carbon atoms or a divalent alkylarylene group;
subscript v2 represents the number of units of formula ($OD^1$) in the unit with subscript y2,
subscript v2 has a value of 0 to 20;
each $R^6$ is an alkoxy group or a hydroxy group;
each $R^9$ is a monovalent hydrocarbon group of 1 to 14 carbon atoms;
each $R^{10}$ is independently selected from the group consisting of a halogen, an acetate group, or a monovalent hydrocarbon group of 1 to 14 carbon atoms;
subscripts w, x, y, y2, z1, and z2 represent relative weights of each unit in the copolymer, where

$$\text{a quantity } (w + x + y + y2 + z1 + z2) = 100,$$

$$80 \leq w < 98,$$

$$1 \leq x \leq 15,$$

$$1 \leq y \leq 5,$$

$$0 \leq y2 \leq 5,$$

$$0 \leq z1 \leq 18,$$

and

$$0 \leq z2 \leq 18;$$

(II) a nonionic surfactant comprising an alcohol alkoxylate of formula

$$R^{19}\!\left(D^5\right)_n\!OH \quad ,$$

, where $R^{19}$ is a branched or linear alkyl group with 8 to 15 carbon atoms, subscript n is at least 23, and each $D^5$ is an independently selected alkylene oxide group of 2 or more carbon atoms;

(III) water; and

(IV) a water dispersible crosslinker;

with the proviso that the emulsion formulation is free of cationic surfactant.

**2.** The emulsion formulation of claim 1, where $R^1$ is a stearyl group; $83 \leq w \leq 93$; $R^3$ is selected from the group consisting of $-CH_3$ and $-OSi(CH_3)_3$; $R^4$ is methyl; $D^2$ is $-(CH_2)_2-$; $5 \leq x \leq 15$; $R^7$ is O, subscript v = 0; $R^8$ is OH; subscript y = 2; subscript z1= 0; and subscript z2 = 0.

**3.** The emulsion formulation of claim 1 or claim 2, further comprising an additional starting material selected from the group consisting of a wax, a biocide, a flame retardant, a wrinkle reducing agent, an antistatic agent, a penetrating agent or a combination of two or more thereof.

**4.** The emulsion formulation of claim 1 or claim 2, where (II) the nonionic surfactant comprises:
a $C_{11-15}$ secondary alkyl alcohol ethoxylate, a 2-ethylhexyl primary alcohol alkoxylate, a $C_{12-40}$ primary alcohol ethoxylate; or a combination thereof.

**5.** The emulsion formulation of claim 1 or claim 2, where (IV) the water dispersible crosslinker comprises a blocked isocyanate.

**6.** A method for preparing the emulsion formulation of claim 1 or claim 2, the method comprising:

(1) copolymerizing starting materials comprising

80 weight % to 98 weight % of (A) a crystallizable monomer of formula

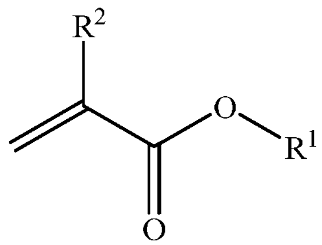

,

where $R^1$ and $R^2$ are as described above;
1 weight % to 15 weight % of (B) a silicone - (meth)acrylate macromonomer of formula

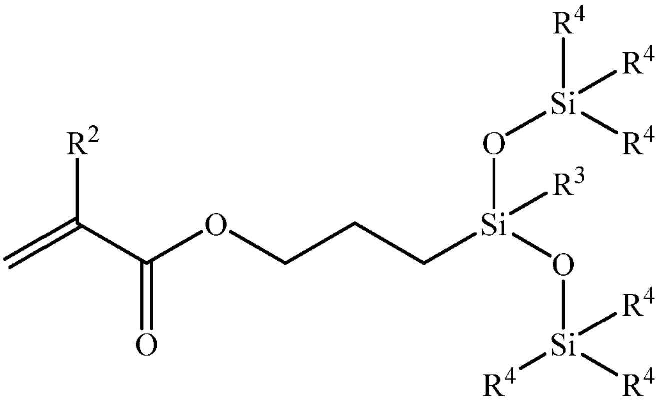

,

where $R^2$, $R^3$ and $R^4$ are as described above;
1 weight % to 5 weight % of (C) a crosslinkable (meth)acrylate monomer of formula

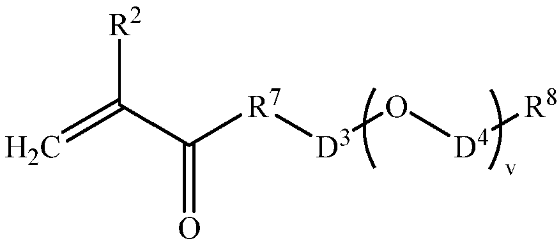

,

where $R^2$, $R^7$, $D^3$, $D^4$, $R^8$, and subscript v are as described above;
where amounts of starting materials (A), (B), and (C) total 100 weight% based on combined amounts of starting materials (A), (B), and (C); and starting materials (A), (B), and (C) are copolymerized in an emulsion further comprising
(D) a surfactant;
(III) water;
(J) an initiator; and

thereby forming an aqueous emulsion comprising (I) the silicone - (meth)acrylate copolymer, (D) the surfactant and (E) the water; and
(2) combining the aqueous emulsion and an additional starting material comprising (IV) the water dispersible crosslinker.

**7.** The process of claim 6, where (D) the surfactant is not nonionic, and the method further comprises (3) removing (D) the surfactant and replacing with (II) the nonionic surfactant.

**8.** The process of claim 6 or claim 7, where starting material (A) is selected from the group consisting of stearyl acrylate, stearyl methacrylate, behenyl methacrylate, behenyl acrylate, and a combination of two or more thereof.

**9.** The process of any one of claims 6 to 8, where starting material (B) is selected from the group consisting of 3-(1,1,1,3,5,5,5-heptamethyltrisiloxan-3-yl)propyl methacrylate; 3-(1,1,1,5,5,5-hexamethyl-3-((trimethylsilyl)oxy)trisiloxan-3-yl)propyl methacrylate; and a combination thereof.

**10.** The process of any one of claims 6 to 9, where starting material (C) is 2-hydroxyethylmethacrylate.

**11.** The process of any one of claims 6 to 10, further comprising adding an additional starting material in step (1), where the additional starting material is selected from the group consisting of (G) a chain transfer agent; (H) an additional monomer that is distinct from starting materials (A), (B), and (C); (J) an inhibitor; (K) a reactive surfactant that is distinct

from starting material (D); and a combination of two or more thereof.

**12.** The process of claim 11, where the reactive surfactant is present, and the reactive surfactant has formula:

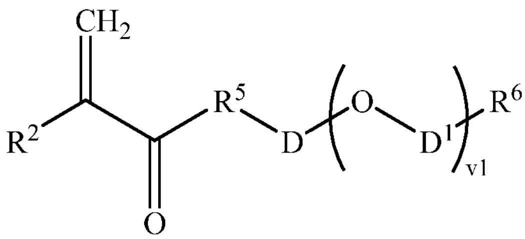

,

where $R^2$, $R^5$, D, $D^1$, and $R^6$ are as described above, and subscript v1 has a value sufficient to give the reactive surfactant a number average molecular weight of 300 to 950 g/mole.

**13.** The process of any one of claims 6 to 12, further comprising adding a further additional starting material after step (1), where the further additional starting material selected from the group consisting of a wax, a biocide, a flame retardant, a wrinkle reducing agent, an antistatic agent, a penetrating agent, and a combination of two or more thereof.

**14.** A process for treating a textile, the process comprising:

I) coating the textile with the emulsion formulation of any one of claims 1 to 5; and
II) heating the textile.

**Patentansprüche**

**1.** Emulsionsformulierung, die zur Behandlung eines Textils geeignet ist, worin die Emulsionsformulierung umfasst:

(I) ein Silikon-(Meth)acrylat-Copolymer, umfassend Einheitsformel

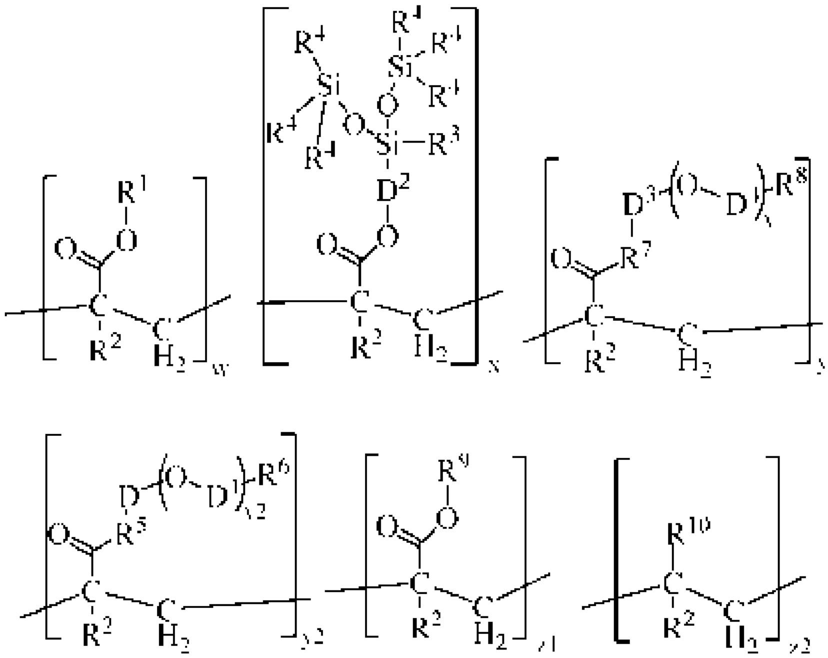

, worin

jedes $R^1$ eine unabhängig ausgewählte Alkylgruppe aus 16 bis 24 Kohlenstoffatomen ist;
jedes $R^2$ unabhängig ausgewählt ist aus der Gruppe bestehend aus H und Methyl;
jedes $D^2$ eine zweiwertige Kohlenwasserstoffgruppe aus 2 bis 12 Kohlenstoffatomen ist;
jedes $R^3$ unabhängig ausgewählt ist aus der Gruppe bestehend aus $R^4$ und einer Gruppe der Formel $-OSi(R^4)_3$;
jedes $R^4$ eine unabhängig ausgewählte einwertige Kohlenwasserstoffgruppe aus 1 bis 12 Kohlenstoffatomen ist;
jedes $R^7$ unabhängig ausgewählt ist aus der Gruppe bestehend aus einem Sauerstoffatom und NH;
$D^3$ eine zweiwertige Kohlenwasserstoffgruppe aus 1 bis 12 Kohlenstoffatomen ist;
jedes $D^4$ eine Alkylengruppe aus 2 bis 4 Kohlenstoffatomen oder eine zweiwertige Alkylarylengruppe ist;
Index v für die Anzahl der Einheiten der Formel $(OD^4)$ in der Einheit mit Index y steht,
Index v einen Wert von 0 bis 12 aufweist;
jedes $R^8$ eine vernetzbare Gruppe ist;
jedes $R^5$ ein Sauerstoffatom ist;
D eine zweiwertige Kohlenwasserstoffgruppe aus 1 bis 12 Kohlenstoffatomen ist;
jedes $D^1$ eine Alkylengruppe aus 2 bis 4 Kohlenstoffatomen oder eine zweiwertige Alkylarylengruppe ist;
Index v2 für die Anzahl der Einheiten der Formel $(OD^1)$ in der Einheit mit Index y2 steht,
Index v2 einen Wert von 0 bis 20 aufweist;
jedes $R^6$ eine Alkoxygruppe oder eine Hydroxygruppe ist;
jedes $R^9$ eine einwertige Kohlenwasserstoffgruppe aus 1 bis 14 Kohlenstoffatomen ist;
jedes $R^{10}$ unabhängig ausgewählt ist aus der Gruppe bestehend aus einem Halogen, einer Acetatgruppe oder einer einwertigen Kohlenwasserstoffgruppe aus 1 bis 14 Kohlenstoffatomen;
Indizes w, x, y, y2, z1 und z2 für relative Gewichte jeder Einheit in dem Copolymer stehen, worin

$$\text{eine Menge } (w + x + y + y2 + z1 + z2) = 100,$$

$$80 \leq w < 98,$$

$$1 \leq x \leq 15,$$

$$1 \leq y \leq 5,$$

$$0 \leq y2 \leq 5,$$

$$0 \leq z1 \leq 18$$

und

$$0 \leq z2 \leq 18;$$

(II) ein nichtionisches Tensid, umfassend ein Alkoholalkoxylat der Formel

$$R^{19}{-}(D^5)_n{-}OH \quad ,$$

worin $R^{19}$ eine verzweigte oder lineare Alkylgruppe mit 8 bis 15 Kohlenstoffatomen ist, Index n mindestens 23 ist und jedes $D^5$ eine unabhängig ausgewählte Alkylenoxidgruppe aus 2 oder mehreren Kohlenstoffatomen ist;
(III) Wasser; und
(IV) ein wasserdispergierbares Vernetzungsmittel;

mit der Maßgabe, dass die Emulsionsformulierung frei von kationischem Tensid ist.

2. Emulsionsformulierung nach Anspruch 1, worin $R^1$ eine Stearylgruppe ist; $83 \leq w \leq 93$; $R^3$ ausgewählt ist aus der Gruppe bestehend aus $-CH_3$ und $-OSi(CH_3)_3$; $R^4$ Methyl ist; $D^2$ $-(CH_2)_2-$ ist; $5 \leq x \leq 15$; $R^7$ O ist; Index v = 0; $R^8$ OH ist; Index y = 2; Index z1 = 0; und Index z2 = 0.

3. Emulsionsformulierung nach Anspruch 1 oder Anspruch 2, ferner umfassend ein zusätzliches Ausgangsmaterial, ausgewählt aus der Gruppe bestehend aus einem Wachs, einem Biozid, einem Flammschutzmittel, einem Mittel zur Faltenreduzierung, einem Antistatikmittel, einem Penetrationsmittel oder einer Kombination aus zwei oder mehreren davon.

4. Emulsionsformulierung nach Anspruch 1 oder Anspruch 2, worin (II) das nichtionische Tensid umfasst: ein sekundäres $C_{11-15}$-Alkylalkoholethoxylat, ein primäres 2-Ethylhexyl-Alkoholalkoxylat, ein primäres $C_{12-40}$-Alkoholethoxylat; oder eine Kombination davon.

5. Emulsionsformulierung nach Anspruch 1 oder Anspruch 2, worin (IV) das wasserdispergierbare Vernetzungsmittel ein blockiertes Isocyanat umfasst.

6. Verfahren zum Herstellen der Emulsionsformulierung nach Anspruch 1 oder Anspruch 2, wobei das Verfahren umfasst:

(1) Copolymerisieren von Ausgangsmaterialien, umfassend

zu 80 Gew.-% bis 98 Gew.-% (A) ein kristallisierbares Monomer der Formel

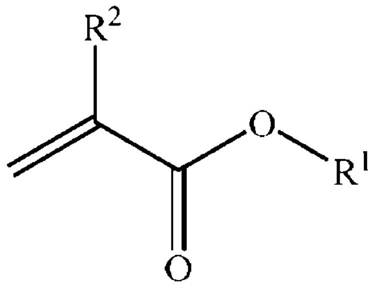

,

worin $R^1$ und $R^2$ wie vorstehend beschrieben sind;
zu 1 Gew.-% bis 15 Gew.-% (B) ein Silikon-(Meth)acrylat-Makromonomer der Formel

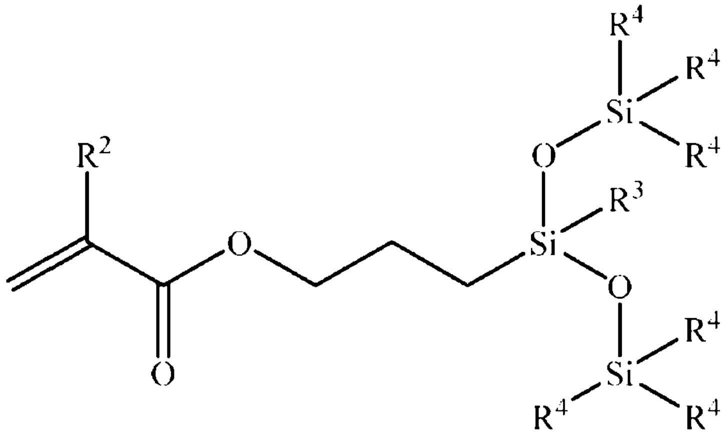

,

worin $R^2$, $R^3$ und $R^4$ wie vorstehend beschrieben sind;
zu 1 Gew.-% bis 5 Gew.-% (C) ein vernetzbares (Meth)acrylat-Monomer der Formel

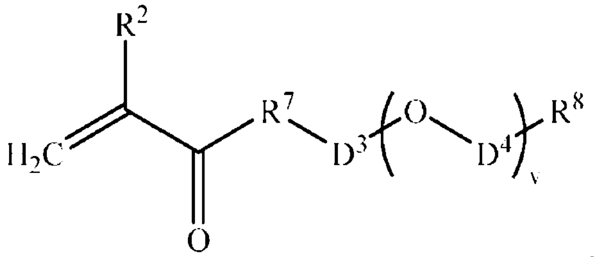

,

worin $R^2$, $R^7$, $D^3$, $D^4$, $R^8$ und Index v wie vorstehend beschrieben sind;
worin Mengen der Ausgangsmaterialien (A), (B) und (C) insgesamt 100 Gew.-% ergeben, basierend auf den kombinierten Mengen der Ausgangsmaterialien (A), (B) und (C); und die Ausgangsmaterialien (A), (B) und (C) in einer Emulsion copolymerisiert werden, ferner umfassend

(D) ein Tensid;
(III) Wasser;
(J) einen Initiator; und

wodurch eine wässrige Emulsion gebildet wird, umfassend (I) das Silikon-(Meth)acrylat-Copolymer, (D) das Tensid und (E) das Wasser; und

(2) Kombinieren der wässrigen Emulsion und eines zusätzlichen Ausgangsmaterials, umfassend (IV) das wasserdispergierbare Vernetzungsmittel.

**7.** Verfahren nach Anspruch 6, worin (D) das Tensid nicht nichtionisch ist und das Verfahren ferner (3) Entfernen (D) des Tensids und Ersetzen durch (II) das nichtionische Tensid umfasst.

**8.** Verfahren nach Anspruch 6 oder Anspruch 7, worin das Ausgangsmaterial (A) ausgewählt wird aus der Gruppe bestehend aus Stearylacrylat, Stearylmethacrylat, Behenylmethacrylat, Behenylacrylat und einer Kombination aus zwei oder mehreren davon.

**9.** Verfahren nach einem der Ansprüche 6 bis 8, worin das Ausgangsmaterial (B) ausgewählt wird aus der Gruppe bestehend aus 3-(1,1,1,3,5,5,5-Heptamethyltrisiloxan-3-yl)propylmethacrylat, 3-(1,1,1,5,5,5-Hexamethyl-3-((trimethylsilyl)oxy)trisiloxan-3-yl)propylmethacrylat; und einer Kombination davon.

**10.** Verfahren nach einem der Ansprüche 6 bis 9, worin das Ausgangsmaterial (C) 2-Hydroxyethylmethacrylat ist.

**11.** Verfahren nach einem der Ansprüche 6 bis 10, ferner umfassend Hinzufügen eines zusätzlichen Ausgangsmaterials in Schritt (1), worin das zusätzliche Ausgangsmaterial ausgewählt wird aus der Gruppe bestehend aus (G) einem Kettenübertragungsmittel; (H) einem zusätzlichen Monomer, das sich von den Ausgangsmaterialien (A), (B) und (C) unterscheidet; (J) einem Hemmer; (K) einem reaktiven Tensid, das sich von dem Ausgangsmaterial (D) unterscheidet; und einer Kombination aus zwei oder mehreren davon.

**12.** Verfahren nach Anspruch 11, worin das reaktive Tensid vorhanden ist und das reaktive Tensid die Formel aufweist:

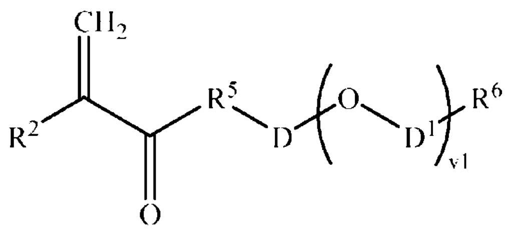

,

worin $R^2$ , $R^5$ , D, $D^1$ und $R^6$ wie vorstehend beschrieben sind und Index v1 einen Wert aufweist, der ausreicht, um dem reaktiven Tensid ein zahlenmittleres Molekulargewicht von 300 bis 950 g/Mol zu verleihen.

**13.** Verfahren nach einem der Ansprüche 6 bis 12, ferner umfassend Hinzufügen eines weiteren zusätzlichen Ausgangsmaterials nach Schritt (1), worin das weitere zusätzliche Ausgangsmaterial ausgewählt wird aus der Gruppe bestehend aus einem Wachs, einem Biozid, einem Flammschutzmittel, einem Mittel zur Faltenreduzierung, einem Antistatikmittel, einem Penetrationsmittel und einer Kombination aus zwei oder mehreren davon.

**14.** Verfahren zum Herstellen eines Textils, wobei das Verfahren umfasst:

I) Beschichten des Textils mit der Emulsionsformulierung nach einem der Ansprüche 1 bis 5; und
II) Erwärmen des Textils.

**Revendications**

**1.** Formulation d'émulsion appropriée pour le traitement d'un textile, où la formulation d'émulsion comprend :

(I) un copolymère de silicone-(méth)acrylate comprenant la formule unitaire

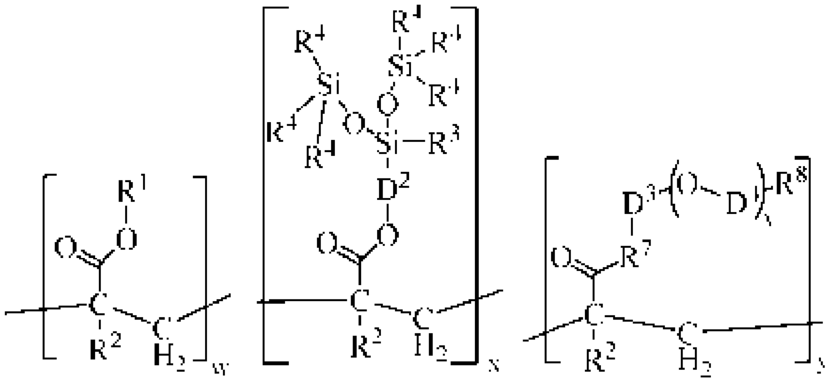

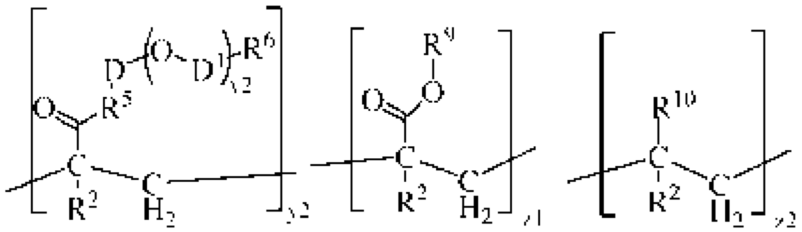

, où

chaque $R^1$ est un groupe alkyle indépendamment choisi de 16 à 24 atomes de carbone ;
chaque $R^2$ est indépendamment choisi dans le groupe constitué de H et de méthyle ;
chaque $D^2$ est un groupe hydrocarboné divalent de 2 à 12 atomes de carbone ;
chaque $R^3$ est indépendamment choisi dans le groupe constitué de $R^4$ et d'un groupe de formule $-OSi(R^4)_3$ ;
chaque $R^4$ est un groupe hydrocarboné monovalent indépendamment choisi de 1 à 12 atomes de carbone ;
chaque $R^7$ est indépendamment choisi dans le groupe constitué d'un atome d'oxygène et de NH ;
$D^3$ est un groupe hydrocarboné divalent de 1 à 12 atomes de carbone ;
chaque $D^4$ est un groupe alkylène de 2 à 4 atomes de carbone ou un groupe alkylarylène divalent ;
l'indice v représente le nombre de motifs de formule ($OD^4$) dans le motif avec l'indice y,
l'indice v a une valeur de 0 à 12 ;
chaque $R^8$ est un groupe réticulable ;
chaque $R^5$ est un atome d'oxygène ;
D est un groupe hydrocarboné divalent de 1 à 12 atomes de carbone ;
chaque $D^1$ est un groupe alkylène de 2 à 4 atomes de carbone ou un groupe alkylarylène divalent ;
l'indice v2 représente le nombre de motifs de formule ($OD^1$) dans le motif avec l'indice y2,
l'indice v2 a une valeur de 0 à 20 ;
chaque $R^6$ est un groupe alcoxy ou un groupe hydroxy ;

chaque $R^9$ est un groupe hydrocarboné monovalent de 1 à 14 atomes de carbone ;
chaque $R^{10}$ est indépendamment choisi dans le groupe constitué d'un halogène, d'un groupe acétate, ou d'un groupe hydrocarboné monovalent de 1 à 14 atomes de carbone ;
les indices w, x, y, y2, z1 et z2 représentent les poids relatifs de chaque motif dans le copolymère, où

$$\text{une quantité } (w + x + y + y2 + z1 + z2) = 100,$$

$$80 \leq w < 98,$$

$$1 \leq x \leq 15,$$

$$1 \leq y \leq 5,$$

$$0 \leq y2 \leq 5,$$

$$0 \leq z1 \leq 18,$$

et

$$0 \leq z2 \leq 18 ;$$

(II) un agent tensioactif non ionique comprenant un alcoxylate d'alcool de formule

$$R^{19}-(D^5)_n-OH ,$$

où $R^{19}$ est un groupe alkyle ramifié ou linéaire avec 8 à 15 atomes de carbone, l'indice n vaut au moins 23, et chaque $D^5$ est un groupe oxyde d'alkylène indépendamment choisi de 2 atomes de carbone ou plus ;
(III) de l'eau ; et
(IV) un agent de réticulation hydrodispersible ;
à condition que la formulation d'émulsion soit exempte d'agent tensioactif cationique.

2. Formulation d'émulsion selon la revendication 1, où $R^1$ est un groupe stéaryle ; $83 \leq w \leq 93$ ; $R^3$ est choisi dans le groupe constitué de $-CH_3$ et de $-OSi(CH_3)_3$ ; $R^4$ est méthyle ; $D^2$ est $-(CH_2)_2-$ ; $5 \leq x \leq 15$ ; $R^7$ est O, l'indice v = 0 ; $R^8$ est OH ; l'indice y = 2 ; l'indice z1 = 0 ; et l'indice z2 = 0.

3. Formulation d'émulsion selon la revendication 1 ou la revendication 2, comprenant en outre un matériau de départ supplémentaire choisi dans le groupe constitué d'une cire, d'un biocide, d'un ignifugeant, d'un agent réducteur de plis, d'un agent antistatique, d'un agent de pénétration ou d'une combinaison de deux de ceux-ci ou plus.

4. Formulation d'émulsion selon la revendication 1 ou la revendication 2, où (II) l'agent tensioactif non ionique comprend : un éthoxylate d'alcool alkylique secondaire en $C_{11 \text{ à } 15}$, un alcoxylate d'alcool primaire 2-éthylhexylique, un éthoxylate d'alcool primaire en $C_{12 \text{ à } 40}$ ; ou une combinaison de ceux-ci.

5. Formulation d'émulsion selon la revendication 1 ou la revendication 2, où (IV) l'agent de réticulation hydrodispersible comprend un isocyanate bloqué.

6. Procédé permettant de préparer la formulation d'émulsion selon la revendication 1 ou la revendication 2, le procédé comprenant :

(1) la copolymérisation de matériaux de départ comprenant
80 % en poids à 98 % en poids de (A) un monomère cristallisable de formule

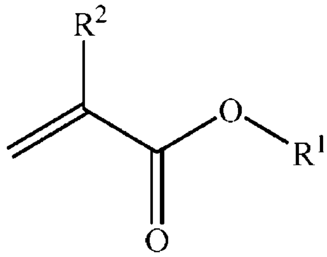

,

où $R^1$ et $R^2$ sont tels que décrits précédemment ;

1 % en poids à 15 % en poids de (B) un macromonomère de silicone-(méth)acrylate de formule

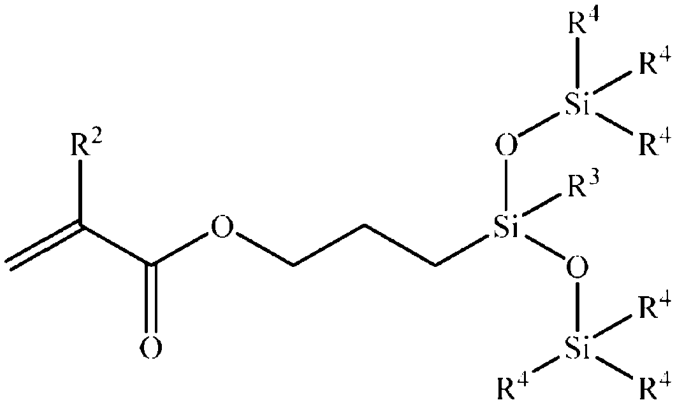

,

où $R^2R^3$ et $R^4$ sont tels que décrits précédemment ;
1 % en poids à 5 % en poids de (C) un monomère (méth)acrylate réticulable de formule

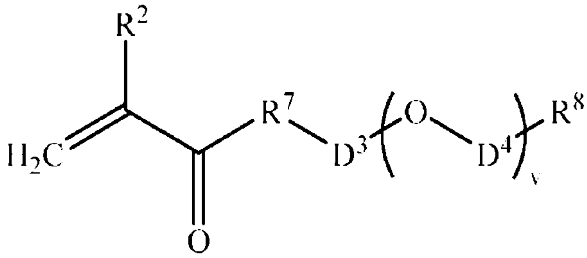

,

où $R^2$, $R^7$, $D^3$, $D^4$, $R^8$ et l'indice v sont tels que décrits précédemment ;
où les quantités des matériaux de départ (A), (B) et (C) totalisent 100 % en poids en fonction des quantités combinées des matériaux de départ (A), (B) et (C) ; et les matériaux de départ (A), (B) et (C) sont copolymérisés dans une émulsion comprenant en outre

(D) un agent tensioactif ;
(III) de l'eau ;
(J) un initiateur ; et

en formant de ce fait une émulsion aqueuse comprenant (I) le copolymère de silicone-(méth)acrylate, (D) l'agent tensioactif et (E) l'eau ; et

(2) la combinaison de l'émulsion aqueuse et d'un matériau de départ supplémentaire comprenant (IV) l'agent de réticulation hydrodispersible.

**7.** Processus selon la revendication 6, où (D) l'agent tensioactif n'est pas non ionique, et le procédé comprend en outre

(3) l'élimination de (D) l'agent tensioactif et son remplacement par (II) l'agent tensioactif non ionique.

**8.** Processus selon la revendication 6 ou la revendication 7, où le matériau de départ (A) est choisi dans le groupe constitué d'acrylate de stéaryle, de méthacrylate de stéaryle, de méthacrylate de béhényle, d'acrylate de béhényle, et d'une combinaison de deux de ceux-ci ou plus.

**9.** Processus selon l'une quelconque des revendications 6 à 8, où le matériau de départ (B) est choisi dans le groupe constitué de méthacrylate de 3-(1,1,1,3,5,5,5-heptaméthyltrisiloxan-3-yl)propyle ; de méthacrylate de 3-(1,1,1,5,5,5-hexaméthyl-3-((triméthylsilyl)oxy)trisiloxan-3-yl)propyle ; et d'une combinaison de ceux-ci.

**10.** Processus selon l'une quelconque des revendications 6 à 9, où le matériau de départ (C) est du méthacrylate de 2-hydroxyéthyle.

**11.** Processus selon l'une quelconque des revendications 6 à 10, comprenant en outre l'ajout d'un matériau de départ supplémentaire à l'étape (1), où le matériau de départ supplémentaire est choisi dans le groupe constitué de (G) un agent de transfert de chaîne ; (H) un monomère supplémentaire qui est distinct des matériaux de départ (A), (B) et (C) ; (J) un inhibiteur ; (K) un agent tensioactif réactif qui est distinct du matériau de départ (D) ; et une combinaison de deux de ceux-ci ou plus.

**12.** Processus selon la revendication 11, où l'agent tensioactif réactif est présent, et l'agent tensioactif réactif a la formule :

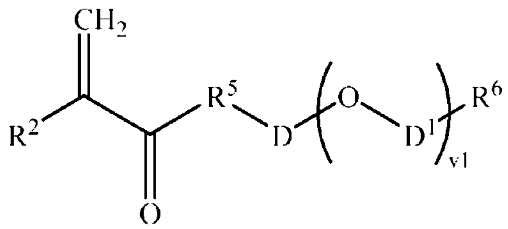

,

où $R^2$, $R^5$, D, $D^1$ et $R^6$ sont tels que décrits précédemment, et l'indice v1 a une valeur suffisante pour donner à l'agent tensioactif réactif une masse moléculaire moyenne en nombre de 300 à 950 g/mole.

**13.** Processus selon l'une quelconque des revendications 6 à 12, comprenant en outre l'ajout d'un autre matériau de départ supplémentaire après l'étape (1), où l'autre matériau de départ supplémentaire est choisi dans le groupe constitué d'une cire, d'un biocide, d'un ignifugeant, d'un agent réducteur de plis, d'un agent antistatique, d'un agent de pénétration, et d'une combinaison de deux de ceux-ci ou plus.

**14.** Processus permettant de traiter un textile, le processus comprenant :

I) le revêtement du textile avec la formulation d'émulsion selon l'une quelconque des revendications 1 à 5 ; et
II) le chauffage du textile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017218713 A
- US 10047199 B, Iimura
- WO 2020142388 A
- US 6420504 B
- US 9212292 B, Pressley
- US 4122029 A, Gee
- US 5387417 A, Rentsch
- US 5811487 A, Schulz
- US 6576051 B, Bardman
- US 20170204558 A, Knaup
- US 9777105 B, Hamajima
- US 10844151 B, Probst
- US 9480977 B


### Non-patent literature cited in the description


- **ODIAN, GEORGE**. Principles of Polymerization. Wiley-Interscience, 2004
- Performance Chemical Research, GASF Schweiz AG, Basel, Switzerland, Encyclopedia of Radicals in Chemistry, Biology and Materials. **PETER NESVADBA**. Radical Polymerization in Industry. John Wiley & Sons, Ltd, 2012